(19) Europäisches Patentamt
European Patent Office
Office européen des brevets

(11) **EP 4 546 692 A1**

(12) **EUROPEAN PATENT APPLICATION**
published in accordance with Art. 153(4) EPC

(43) Date of publication:
**30.04.2025 Bulletin 2025/18**

(21) Application number: **23846831.8**

(22) Date of filing: **28.06.2023**

(51) International Patent Classification (IPC):
**H04L 5/00** (2006.01)   **H04L 25/02** (2006.01)
**H04B 7/06** (2006.01)   **H04L 1/08** (2006.01)

(52) Cooperative Patent Classification (CPC):
**H04B 7/06; H04L 1/08; H04L 5/00; H04L 25/02**

(86) International application number:
**PCT/KR2023/009047**

(87) International publication number:
**WO 2024/025172 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.07.2022 KR 20220091430
05.08.2022 KR 20220098152**

(71) Applicant: **Samsung Electronics Co., Ltd.
Suwon-si, Gyeonggi-do 16677 (KR)**

(72) Inventors:
• **HAN, Seongbae
Suwon-si Gyeonggi-do 16677 (KR)**
• **MIN, Kyungsik
Suwon-si Gyeonggi-do 16677 (KR)**
• **JUNG, Jaemin
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR PROVIDING SRS CONFIGURATION IN FRONTHAUL INTERFACE**

(57)   In embodiments, a method performed by a radio unit (RU) may comprise an operation of receiving sounding reference signals (SRSs). The method may comprise an operation of receiving a control plane (C-plane) message including SRS configuration information from a distributed unit (DU) via a fronthaul interface. The method may comprise an operation of performing channel estimation on the basis of the SRSs and the SRS configuration information. The method may comprise an operation of performing beamforming on the basis of the channel estimation.

FIG. 5

## Description

**[Technical Field]**

The present disclosure relates to a fronthaul interface. More specifically, the present disclosure relates to an electronic device and a method for providing a sounding reference signal (SRS) configuration in a fronthaul interface.

**[Background Art]**

As transmission capacity in wireless communication systems increases, a function split that functionally separates base stations is being applied. According to the function split, the base station may be separated into a distributed unit (DU) and a radio unit (RU). A fronthaul interface is defined for communication between the DU and the RU.

The above-described information may be provided as a related art for the purpose of helping to understand the present disclosure. No claim or determination is raised as to whether any of the above-described information may be applied as a prior art related to the present disclosure.

**[Disclosure]**

**[Technical Solution]**

According to embodiments, a method performed by a radio unit (RU) may comprise receiving sounding reference signals (SRSs). The method may comprise receiving, from a distributed unit (DU) via a fronthaul interface, a control plane (C-plane) message including SRS configuration information. The method may comprise performing channel estimation based on the SRSs and the SRS configuration information. The method may comprise performing beamforming based on the channel estimation.

According to embodiments, a method performed by a distributed unit (DU may comprise generating SRS configuration information for channel estimation using a sounding reference signal (SRS) at a radio unit (RU). The method may comprise transmitting, via a fronthaul interface to the RU, a control plane (C-plane) message including the SRS configuration information. The channel estimation may be utilized for beamforming at the RU.

According to embodiments, an electronic device of a radio unit (RU) may comprise at least one fronthaul transceiver, at least one RF transceiver, and at least one processor coupled to the at least one fronthaul transceiver and the at least one RF transceiver. The at least one processor may be configured to receive sounding reference signals (SRSs). The at least one processor may be configured to receive, via a fronthaul interface from a distributed unit (DU), a control plane (C-plane) message including SRS configuration information. The at least one processor may be configured to perform channel estimation based on the SRSs and the SRS configuration information. The at least one processor may be configured to perform beamforming based on the channel estimation.

According to embodiments, an electronic device of a distributed unit (DU) may comprise at least one transceiver, and at least one processor coupled to the at least one transceiver. The at least one processor may be configured to generate SRS configuration information for channel estimation using a sounding reference signal (SRS) at a radio unit (RU). The at least one processor may be configured to transmit, via a fronthaul interface to the RU, a control plane (C-plane) message including the SRS configuration information. The channel estimation may be utilized for beamforming at the RU.

According to embodiments, a non-transitory computer-readable storage medium is provided. The non-transitory computer-readable storage medium may store one or more programs. The one or more programs may cause, when executed by a processor of a radio unit (RU), the RU to receive sounding reference signals (SRSs), receive, from a distributed unit (DU) via a fronthaul interface, a control plane (C-plane) message including SRS configuration information, perform channel estimation based on the SRSs and the SRS configuration information, and perform beamforming based on the channel estimation.

According to embodiments, a non-transitory computer-readable storage medium is provided. The non-transitory computer-readable storage medium may store one or more programs. The one or more programs may cause, when executed by a processor of a distributed unit (DU), the DU to generate SRS configuration information for channel estimation using a sounding reference signal (SRS) at a radio unit (RU), and transmit, via a fronthaul interface to the RU, a control plane (C-plane) message including the SRS configuration information. The channel estimation may be utilized for beamforming at the RU.

**[Description of the Drawings]**

FIG. 1 illustrates a wireless communication system according to embodiments.

FIG. 2A illustrates a fronthaul interface, according to embodiments.

FIG. 2B illustrates a fronthaul interface of an open (O) - radio access network (RAN), according to embodiments.

FIG. 3A illustrates a functional configuration of a distributed unit (DU) according to embodiments.

FIG. 3B illustrates a functional configuration of a radio unit (RU) according to embodiments.

FIG. 4 illustrates an example of a function split between a DU and an RU according to embodiments.

FIG. 5 illustrates an example of sounding reference signal (SRS) channel estimation of an RU according to embodiments.

FIG. 6 illustrates an example of a functional configuration of an RU for SRS channel estimation according to embodiments.

FIG. 7 illustrates an example of signaling between a DU and an RU for SRS channel estimation of an RU according to embodiments.

FIG. 8 illustrates an example of a control plane (C-plane) message including SRS configuration information according to an embodiment.

FIG. 9 illustrates an example of SRS multiplexing information for each UE, according to an embodiment.

FIG. 10 illustrates an example of SRS channel information according to an embodiment.

FIGS. 11A and 11B illustrate examples of SRS channel estimation according to a management plane (M-plane) message according to an embodiment.

FIG. 12 illustrates examples of SRS channel estimation based on RU capability according to an embodiment.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to configuration (e.g. setup, setting, arrangement, control), terms referring to signal (e.g., packet, message, signal, information, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

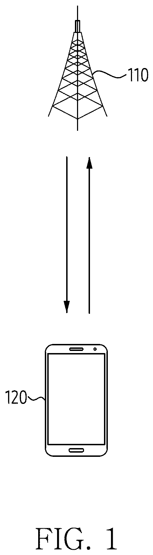

FIG. 1 illustrates a wireless communication system according to embodiments.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE)', 'customer premises equipment, (CPE)', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information related to the beam. The information related to the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

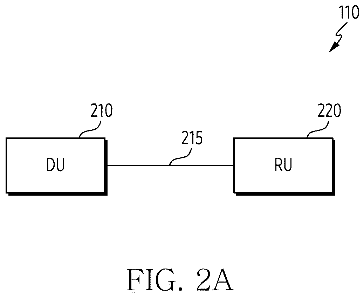

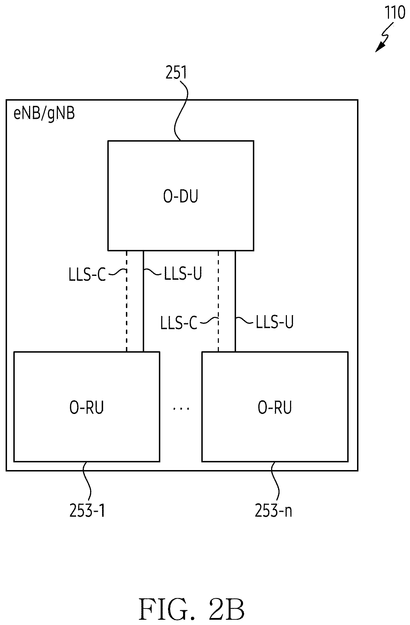

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface according to embodiments. Unlike a backhaul between a base station and a core network, the fronthaul refers to a link between entities of a base station after a radio access network. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU 210 may be implemented to perform functions for packet data convergence protocol (PDCP), radio link control (RLC), media access control (MAC), and physical (PHY), and the RU 220 may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

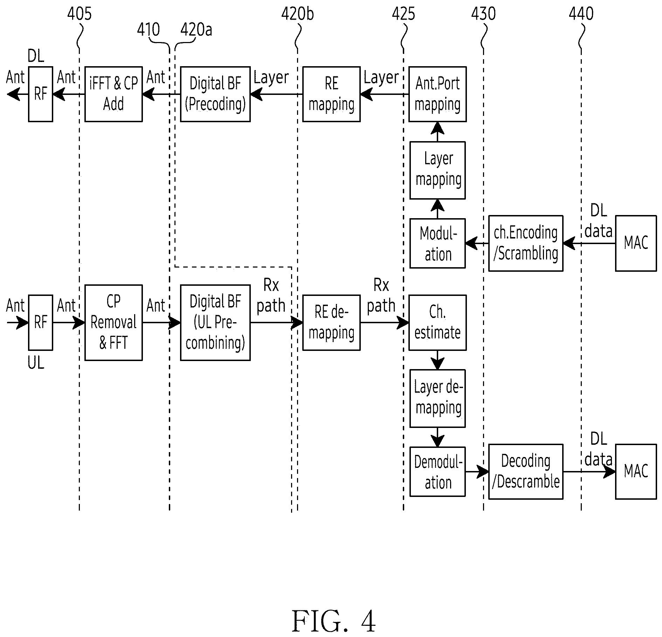

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), CP insertion (CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN) according to embodiments. As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

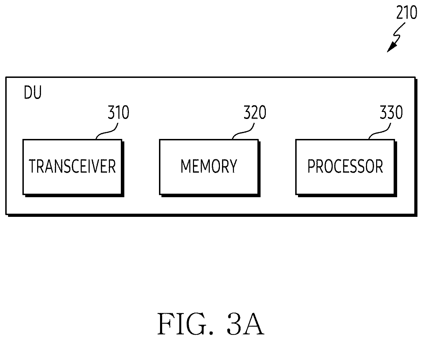

In FIG. 2B, entities of the base station 110 have been described as O-DU and O-RU to describe O-RAN. However, these designations are not to be construed as limiting the embodiments of the present disclosure. In embodiments described with reference to FIGS. 3A to 9, operations of the DU 210 may also be performed by the O-DU 251. A description of the DU 210 may be applied to the O-DU 251. Likewise, in embodiments described with reference to FIGS. 3A to 9, operations of the RU 220 may also be performed by the O-RU 253-1. A description of the RU 220 may be applied to the O-RU 253-1.

FIG. 3A illustrates a functional configuration of a distributed unit (DU) according to embodiments. A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

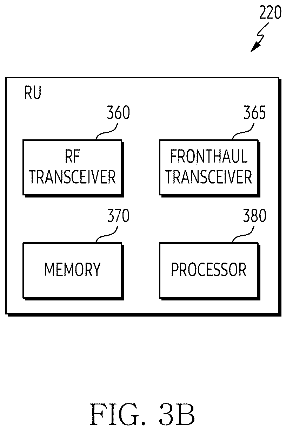

FIG. 3B illustrates a functional configuration of a radio unit (RU) according to embodiments. A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 320. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce the transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied. In the O-RAN standard, a type of O-RU is distinguished depending on whether a precoding function is located at an interface of the O-DU or is located at the O-RU interface. An O-RU in which precoding is not performed (i.e., low complexity) may be referred to as a CAT-A O-RU. An O-RU in which precoding is performed may be referred to as a CAT-B O-RU.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.

2) ecpriReserved (3 bits): This parameter is reserved for further use of eCPRI.

3) ecpriConcatenation (1 bit): This parameter indicates when eCPRI concatenation is in use.

4) ecpriMessage (1 byte): This parameter indicates a type of a service carried by a message type. For example, the parameter indicates an IQ data message, a real-time control data message, or a transport network delay measurement message.

5) ecpriPayload (2 bytes): This parameter indicates a byte size of a payload portion of the eCPRI message.

6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.

7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier 'BandSector_ID', a component carrier identifier 'CC_ID', a spatial stream identifier 'RU_Port_ID', and a distributed unit identifier 'DU_Port_ID'. The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.

2) BandSector_ID: Aggregated cell identifier (identification of band and sector supported by O-RU).

3) CC_ID: CC_ID identifies carrier components supported by the O-RU.

4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes by Section Type are as follows.

1) sectionType=0: Used to indicate resource blocks or symbols not used in the DL or the UL.

2) sectionType=1: Used for most DL/UL wireless channels. Herein, "most" refers to channels that do not require time or frequency offsets such as those required for mixed numerology channels.

3) sectionType=2: reserved for further use

4) sectionType=3: PRACH and mixed-numerology channels. Channels that require time or frequency offsets or differ from the nominal SCS value(s).

5) sectionType=4: reserved for further use

6) sectionType=5: UE scheduling information. Transmits UE scheduling information so that the RU can perform real-time BF weight calculation (O-RAN optional BF method)

7) sectionType=6: Transmit UE-specific channel information. Periodically transmits UE channel information so that the RU can perform real-time BF weight calculation (O-RAN optional BF method)
8) sectionType=7: Used for LAA support

For channel estimation in uplink, a terminal may transmit a sounding reference signal (SRS) to a base station. The base station may perform channel estimation based on the received SRS. The base station may perform communication based on a channel estimation result. For example, the base station may perform beamforming (e.g., digital beamforming analog beamforming) based on the channel estimation result.

According to types (e.g., the function splits of FIG. 4) of function split of a base station, channel estimation may be performed in the DU or the RU. For example, RE de-mapping for the SRS or channel estimation for the SRS may be performed in the DU in the third function split 420a (Option 7-2x Category A) or the fourth function split 420b (Option 7-2x Category B). The DU may transmit channel information obtained based on the channel estimation result to the RU. Thereafter, the RU may perform beamforming based on the channel information. However, since channel estimation is performed in the DU, a processing delay occurs between a time when the RU receives the SRS and a time when channel information is obtained. In particular, if the capacity of a fronthaul between the DU and the RU is insufficient, a delay at the fronthaul interface is large. Since a channel is changed over time, if the delay time between a reception time of the SRS and a time when the channel estimation result is applied to beamforming increases, the beamforming performance decreases.

In order to solve the above-described problem, in embodiments of the present disclosure, channel estimation (hereinafter, SRS channel estimation) using the SRS may be performed by the RU. Through the SRS channel estimation of the RU, the burden of the fronthaul interface between the DU and the RU may be reduced. In addition, as the processing delay required to obtain channel information decreases, the RU may obtain channel information that substantially matches with the current radio channel. Accordingly, beamforming performance based on the SRS channel estimation may be improved. Hereinafter, in the present disclosure, operations of the RU for SRS channel estimation and signaling required for performing the SRS channel estimation in the RU are described.

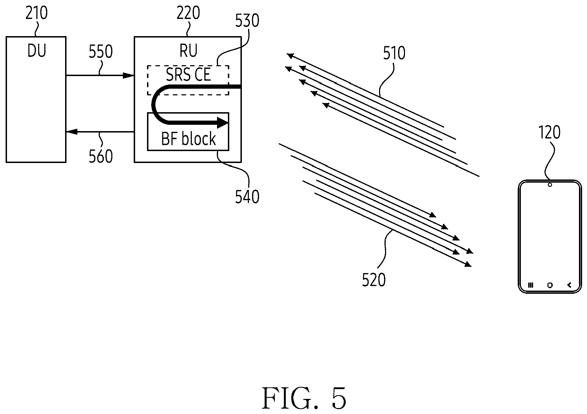

FIG. 5 illustrates an example of a sounding reference signal (SRS) channel estimation of an RU according to embodiments. The RU illustrates the RU 220 of FIG. 2A. According to an embodiment, the RU 220 may include an O-RU 253-1.

(1) Access Network

Referring to FIG. 5, operations of a terminal 120 and the RU 220 in an access network are described. A terminal (e.g., the terminal 120 of FIG. 1) may transmit SRSs 510 to the RU 220. The terminal 120 may generate SRS sequences. The terminal 120 may generate SRS sequences based on higher layer signaling (e.g., radio resource control signaling (RRC)) received from a base station (e.g., the DU 210, the RU 220).

The higher layer signaling for SRS transmission may include parameters for each SRS resource. For example, parameters for SRS transmission may include resource mapping information. The resource mapping information may include a location of SRS symbol to which the SRS sequences are mapped (e.g., location from the last symbol of a slot), the number of SRS symbols, and a repetition factor. In addition, for example, the parameters for SRS transmission may include transmission comb information. The transmission comb information may include a comb value, a comb offset, and a cyclic shift value. In addition, for example, the parameters for SRS transmission may include resource type information. The resource type information may indicate whether SRS transmission is periodic, semi-persistent, or aperiodic. In case that the SRS transmission is periodic or semi-persistent, the resource type information may include information indicating a period and an offset. In addition, for example, the parameters for SRS transmission may include frequency hopping information. The frequency hopping information may include parameters (e.g., $C_{SRS}$, $B_{SRS}$, $b_{hop}$ of 3GPP TS 38.211) for SRS frequency hopping. In addition, for example, the parameters for SRS transmission may include hopping scheme information. The hopping scheme information may indicate group hopping or sequence hopping, or 'neither'. In addition, for example, the parameters for SRS transmission may include frequency domain information. The frequency domain information may include a frequency domain shift value and a frequency location parameter in the frequency domain when allocating SRS. In addition, for example, the parameters for SRS transmission may include partial frequency sounding information. The partial frequency sounding information may include a start RB index, a frequency scaling factor, and an indicator for RB hopping enabling.

The RU 220 may transmit a downlink signal 520 to the terminal 120. For example, the RU 220 may transmit the downlink signal 520 to the terminal 120 based on the received SRSs 510. According to an embodiment, the downlink signal 520 may include downlink control information. The RU 220 may generate control information based on the channel estimation result. The RU 220 may transmit control information to the terminal 120. Based on the control information, the RU 220 may receive an uplink signal from the terminal 120 or transmit data to the terminal 120. For example, the control information may include downlink resource allocation. In addition, for example, the control information may include uplink resource allocation. In addition, for example, the control information may include beamforming information (e.g., a transmission configuration indication (TCI) state of 3GPP). In addition, for example, the control information may include precoding information. As an example, the precoding information may include a precoding matrix indicator (PMI). In addition, for example, the control information may include SRS index information.

According to an embodiment, the downlink signal 520 may include downlink data (e.g., a physical downlink shared channel (PDSCH)). The RU 220 may estimate a downlink channel based on channel reciprocity. At this time, a duplex mode of a frequency band of the downlink signal 520 may be a time duplex division (TDD). The RU 220 may transmit downlink data based on an estimation result of the downlink channel.

Although only the transmission of the downlink signal 520 is illustrated in FIG. 5, embodiments of the present disclosure are not limited thereto. For example, the RU 220 may receive an uplink signal (e.g., uplink control information (UCI), SRS, physical uplink shared channel (PUSCH), physical random access channel (PRACH)) based on a result of the SRS channel estimation 530. Meanwhile, for another example, the RU 220 may transmit the downlink signal 520 generated regardless of the received SRSs 510 to the terminal 120.

(2) RU: SRS channel estimation 530 and beamforming 540

In the RU 220, operations of the RU 220 according to the SRS channel estimation 530 and a result of the channel estimation are described. The RU 220 may perform the SRS channel estimation 530. As the SRS channel estimation 530 is performed in the RU 220, a new LLS structure between the DU 210 and the RU 220 may be defined. The SRS channel estimation 530 refers to an operation of the RU 220 that obtains information on an uplink channel with the terminal 120 based on SRSs transmitted from the terminal 120. The RU 220 may perform beamforming 540. For example, the RU 220 may perform the beamforming 540 based on a result of the SRS channel estimation 530.

The beamforming 540 may be executed in at least one of a frequency domain and a time domain. The beamforming 540 may be executed in a frequency domain. Frequency domain beamforming is essentially a digital operation because it is performed between RE mapping and FFT/iFFT processing step (in the UL and the DL, respectively). The beamforming 540 may be performed in a time domain. Time domain beamforming may be performed in a digital domain or an analog domain. In case of being executed in both the frequency domain and the time domain, the beamforming 540 may be referred to as hybrid beamforming. The beamforming 540 executed in the digital domain may be referred to as digital beamforming. The beamforming 540 executed in the analog domain may be referred to as analog beamforming. The beamforming 540 may include at least one of the digital beamforming and the analog beamforming. The beamforming 540 may include the digital beamforming. The beamforming 540 may include the analog beamforming. The beamforming 540 may include the digital beamforming and the analog beamforming.

The implementation of the beamforming 540 in the RU 220 may be performed by various schemes. According to an embodiment, the beamforming 540 may be performed based on a predefined-beam beamforming scheme. In the predefined-beam beamforming scheme, 'beamId' may be used to indicate a specific beam to be used in the RU 220. Here, the specific beam may be a frequency-domain beam, a time-domain beam, or a beam by hybrid beamforming.

According to an embodiment, it may be performed based on a weight-based dynamic beamforming scheme. The DU 210 may generate weights for creating a beam. Therefore, the DU 210 is required to know a specific antenna characteristic of the RU 220. The specific antenna characteristic may include at least one of the number of antenna elements in a vertical direction, the number of antenna elements in a horizontal direction, or an interval between antenna elements. The weight vector for each beam may have 'beamId'.

According to an embodiment, it may be performed based on an attribute-based dynamic beamforming scheme. The DU 210 may instruct the RU 220 to use a specific beam attribute. For example, a beam attribute may include at least one of an azimuth pointing parameter, a zenith pointing parameter, an azimuth beamwidth parameter, a zenith beamwidth parameter, an azimuth sidelobe parameter, or a zenith sidelobe parameter. A specific beam attribute for each beam may be related to 'beamId'.

According to an embodiment, it may be performed based on a channel information-based beamforming scheme. In case that the channel information-based beamforming scheme is used for at least one layer (or spatial stream), the DU 210 may use the same beamforming scheme for all layers (or spatial streams) of a specific time-frequency resource element(s). Similarly, in case that an attribute-based dynamic beamforming scheme is used for one or more layers (or spatial streams), the DU 210 may use the same beamforming scheme for all layers (or spatial streams) of a specific time-frequency resource element(s).

(3) Fronthaul interface

Operations of the DU 210 and the RU 220 at a fronthaul interface between the DU 210 and the RU 220 are described. As the SRS channel estimation 530 is performed by the RU 220 rather than the DU 210, the RU 220 may be required to receive information for the SRS channel estimation 530 from the DU 210. The DU 210 may transmit SRS configuration information necessary for the SRS channel estimation 530 to the RU 220. The RU 220 may receive a C-plane message 550 including the SRS configuration information from the DU 210. According to an embodiment, the SRS configuration information may be transmitted from the DU 210 to the RU 220 through section information or section extension information of the C-plane message. The RU 220 may obtain the SRS configuration information. The RU 220 may perform the SRS channel estimation 530 based on the SRS configuration information and the SRSs 510.

A result of channel estimation may be processed at an upper layer. To this end, the RU 220 may transmit channel information to the DU 210. The DU 210 may receive a C-plane message 560 including the channel information from the RU 220. According to an embodiment, the channel information may be transmitted from the DU 210 to the RU 220 through section information or section extension information of the C-plane message. For example, the RU 220 may transmit a C-plane message including a result of the SRS channel estimation 530 to the DU 210. The RU 220 may report the result of the SRS channel estimation 530 to the DU 210. The DU 210 or an upper node connected to the DU 210 may perform resource management based on the channel information. The DU 210 or an upper node connected to the DU 210 may perform uplink synchronization control based on the channel information. The DU 210 or an upper node connected to the DU 210 may obtain channel information based on the channel information.

FIG. 5 illustrates a series of operations of the DU 210 or the RU 220 on an access network, the RU 220, and a fronthaul interface, however, embodiments of the present disclosure are not limited to FIG. 5. Each operation described in FIG. 5 is an example of implementation, but it is not necessarily interpreted that the operations of the DU 210 or the RU 220 illustrated in FIG. 5 must be performed together in all embodiments. Operations in a fronthaul interface may be performed in parallel or independently of operations in an access network. Operations of the RU 220 may be performed in parallel or independently of the operations in the access network. The operations of the RU 220 may be performed in parallel or independently of the operations in the fronthaul interface.

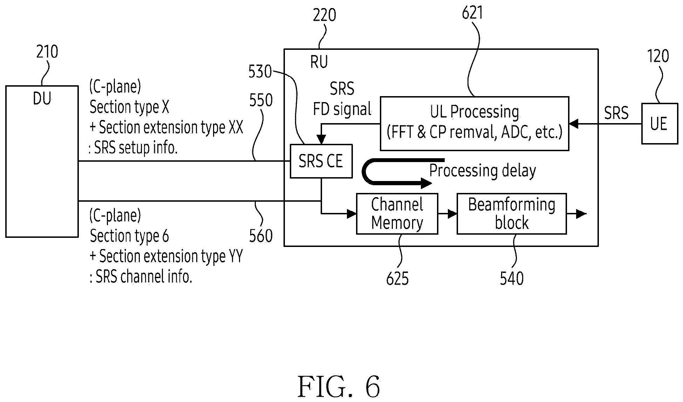

FIG. 6 illustrates an example of a functional configuration of an RU for SRS channel estimation according to embodiments. The RU exemplifies the RU 220 of FIG. 2A. According to an embodiment, the RU 220 may include an O-RU 253-1. Hereinafter, in FIG. 6, channel information-based beamforming is described as an example. For SRS channel estimation in FIG. 6, a description of the SRS channel estimation 530 in FIG. 5 may be referred to. For beamforming in FIG. 6, a description of the beamforming 540 in FIG. 5 may be referred to.

Referring to FIG. 6, the RU 220 may receive SRSs from the terminal 120 (e.g., UE). The RU 220 may perform UL signal processing 621. The RU 220 may perform UL signal processing 621 for SRSs. The UL signal processing 621 may include analog to digital converting (ADC). The UL signal processing 621 may include fast fourier transform (FFT) and cyclic prefix (CP) removal. The UL signal processing 621 may include RE demapping.

The RU 220 may perform SRS channel estimation 530. Instead of performing SRS channel estimation in the DU 210, the SRS channel estimation 530 may be performed in the RU 220. For the SRS channel estimation 530, the RU 220 is required to know a generation scheme of SRS sequences, a mapping scheme of the SRS sequences, and information on resources to which SRSs are transmitted. Accordingly, the DU 210 may transmit, to the RU 220, SRS configuration information for SRS reception and SRS channel estimation 530. According to an embodiment, the DU 210 may transmit a C-plane message 550 including the SRS configuration information for SRS reception and SRS channel estimation 530 to the RU 220. The RU 220 may obtain SRS configuration information from the DU 210. The RU 220 may perform SRS channel estimation 530 based on SRS configuration information.

The RU 220 may generate channel information based on the SRS channel estimation 530. For example, the channel information may be 'ciIsample(Ci)' or 'ciQsample(Cq)' of Section Type 6, or may include a value obtained therefrom. The Ci indicates an in-phase (I) value of complex channel information, and the Cq indicates a quadrature (Q) value of complex channel information. According to an embodiment, the RU 220 may transmit a C-plane message 560 including channel information to the DU 210. According to an embodiment, the RU 220 may store channel information in a channel memory 625. The channel memory 625 of the RU 220 may store channel information. The RU 220 may perform beamforming 540. For example, the RU 220 may perform beamforming 540 based on scheduling information (e.g., section information). For the scheduled terminal 120, the RU 220 may obtain the stored channel information from the channel memory 625. The RU 220 may perform beamforming 540 based on the channel information. For example, the RU 220 may calculate and obtain a beamforming weight (or multi-user (MU) weight) for minimum mean square error (MMSE) (or zero forcing beamforming (ZFBF)) for the current channel.

The RU 220 according to embodiments may perform SRS channel estimation 530 to improve the performance of the beamforming 540. As the SRS channel estimation 530 is performed in the RU 220 rather than the DU 210, a processing delay required for obtaining channel information may be shortened. Since the beamforming 540 is performed based on channel information at a timing closer to a timing at which SRSs are received, channel information relatively close to the actual channel characteristic may be used for the beamforming 540. In addition, since the DU 210 does not provide channel information to the RU 220, but the RU 220 directly obtains channel information, a fronthaul capacity decreases.

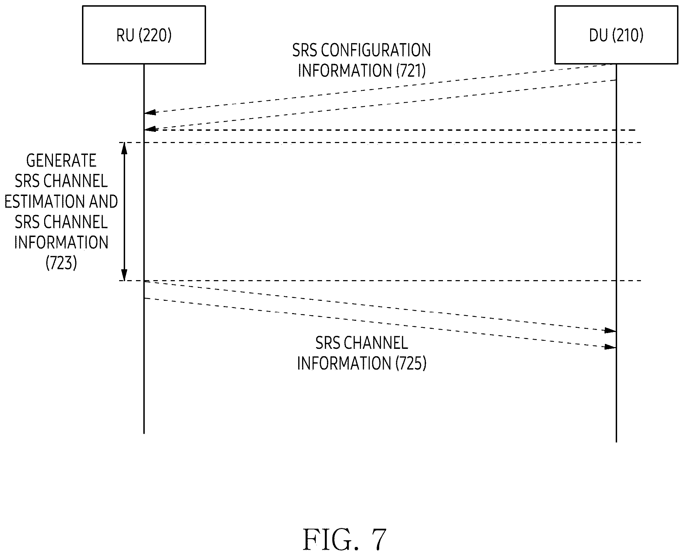

As described above, as the SRS channel estimation 530 is performed in the RU 220, new C-plane messages 550 and 560 are required to be defined in the fronthaul interface. Hereinafter, C-plane messages for the SRS channel estimation 530 in the RU 220 will be described in detail with reference to FIG. 7.

FIG. 7 illustrates an example of signaling between a DU and an RU for SRS channel estimation of an RU according to embodiments. The DU exemplifies the DU 210 of FIG. 2A. According to an embodiment, the DU 210 may include an O-DU 251. The RU exemplifies the RU 220 of FIG. 2A. According to an embodiment, the RU 220 may include an O-RU 253-1.

Referring to FIG. 7, in operation 721, the DU 210 may transmit SRS configuration information to the RU 220. The DU 210 may generate SRS configuration information. For SRS channel estimation in the RU 220, the DU 210 may provide resource allocation information to the RU 220. The resource allocation information may be configured as a UE-specific. According to an embodiment, the DU 210 may generate SRS configuration information for an SRS symbol. The SRS configuration information may include SRS resource allocation information in an SRS symbol. The SRS configuration information may indicate a range of PRBs allocated for SRS transmission in the SRS symbol. The SRS configuration information may include section information on each of UEs to which resources are allocated in the SRS symbol. Accordingly, the SRS configuration information may include identification information for each of the UEs.

The DU 210 may transmit SRS configuration information to the RU 220. According to an embodiment, the SRS configuration information may be transmitted based on SRS transmission configuration. For example, if SRS is set to be transmitted periodically (e.g., periodic transmission or semi-persistent transmission), the DU 210 may periodically transmit the SRS configuration information to the RU 220. The SRS configuration information may be generated for at least one SRS symbol that arrives periodically. For another example, in case that the SRS is transmitted aperiodically, the DU 210 may periodically transmit SRS configuration information corresponding to a specific SRS symbol to the RU 220.

The SRS configuration information may include parameters related to SRS transmission. The SRS configuration information may include parameters for generating an SRS sequence (hereinafter, SRS sequence information) and parameters related to resource allocation of SRSs (hereinafter, SRS resource allocation information). The parameters may be transmitted to the RU 220 through a C-plane message. According to an embodiment, all of the parameters may be included in section information in the C-plane message. According to another embodiment, at least a portion of the parameters may be included in section information in the C-plane message, and another portion of the parameters may be included in section extension information in the C-plane message. In addition, according to an additional embodiment, a portion of the parameters are fixed values and may be omitted in the C-plane message. Hereinafter, parameters of SRS configuration information will be described in detail.

The SRS configuration information may include parameters required for the UE to generate an SRS sequence. The SRS configuration information may directly or indirectly include parameters defined in 3GPP to generate an SRS sequence. Here, 'directly including' means that information, which indicates directly parameters defined in 3GPP, is transmitted through a fronthaul interface. Here, 'indirectly including' means that information, which indicates indirectly information indicating directly parameters defined in 3GPP and is structured in different ways, is transmitted through a fronthaul interface.

According to an embodiment, the SRS configuration information may include at least one of parameters indicated by transmission comb information. The SRS setting information may include at least one of a comb value, a comb offset, or a cyclic shift value. For example, the SRS configuration information may include information for indicating the comb value. In addition, for example, the SRS configuration information may include information for indicating the comb offset. In addition, for example, the SRS configuration information may include information for indicating the cyclic shift value.

According to an embodiment, the SRS configuration information may include a parameter indicated by a hopping scheme information. The hopping scheme information may indicate group hopping or sequence hopping. The SRS configuration information may include a value indicating whether group hopping (or sequence hopping) is applied.

According to an embodiment, the SRS configuration information may include at least one of sequence information. The sequence information may include at least one of a sequence group number for a base sequence and a sequence number. For example, the SRS configuration information may include information for indicating 'u'. For example, the SRS configuration information may include information for indicating 'v'.

The SRS configuration information may include parameters related to resource allocation. The SRS configuration information may directly or indirectly include parameters defined in 3GPP to generate an SRS sequence. According to an embodiment, the SRS configuration information may include at least one of parameters indicated by transmission type information. The SRS setting information may include at least one of a parameter, a period, or an offset indicating whether the SRS transmission is periodic, semi-persistent, or aperiodic. For example, the SRS configuration information may include information indicating whether the SRS transmission is periodic, semi-persistent, or aperiodic. In addition, for example, the SRS configuration information may include information indicating a transmission period. In addition, for example, the SRS configuration information may include information indicating a transmission offset. Meanwhile, according to another embodiment, as the SRS configuration information provided from a fronthaul interface is provided in units of symbols, parameters indicating temporal resources may be omitted. For example, parameters indicating a time domain behavior of SRS may not be included in the SRS configuration information.

According to an embodiment, the SRS configuration information may include at least one of parameters indicated by frequency domain information. The SRS setting information may include at least one of a frequency domain shift value or a frequency location parameter in the frequency domain when allocating SRS. For example, the SRS configuration information may include information for indicating a frequency domain shift value. In addition, for example, the SRS configuration information may include information for indicating a frequency location parameter.

According to an embodiment, the SRS configuration information may include at least one of parameters indicated by resource mapping information. The SRS configuration information may include at least one of a location of an SRS symbol to which the SRS sequences are mapped (e.g., a location from a last symbol of a slot), the number of SRS symbols, or a repetition factor. For example, the SRS configuration information may include information for indicating a location of the SRS symbol. In addition, for example, the SRS configuration information may include information for indicating the number of SRS symbols. In addition, for example, the SRS configuration information may include information for indicating the repetition factor.

According to an embodiment, the SRS configuration information may include at least one of parameters indicated by the frequency hopping information. The SRS configuration information may include at least one of parameters (e.g., $C_{SRS}$, $B_{SRS}$, $b_{hop}$ of 3GPP TS 38.211) for SRS frequency hopping. For example, the SRS configuration information may include information for indicating '$C_{SRS}$'. For example, the SRS configuration information may include information for indicating '$B_{SRS}$'. For example, the SRS configuration information may include information for indicating "$b_{hop}$'.

According to an embodiment, the SRS configuration information may include at least one of parameters indicated by the partial frequency sounding information. The partial frequency sounding means allowing SRS transmission on partial frequency resources within legacy SRS frequency resources, in order to provide more flexibility for SRS transmission. The SRS configuration information may include at least one of a start RB index, a frequency scaling factor, and an indicator for RB hopping enabling. For example, the SRS configuration information may include the start RB index. For example, the SRS configuration information may include the frequency scaling factor. For example, the SRS configuration information may include the indicator for the RB hopping enabling.

In operation 723, the RU 220 may generate SRS channel estimation and SRS channel information. According to an embodiment, the RU 220 may perform channel estimation based on SRSs received from the terminal 120. In order to calculate beamforming weights in the RU 220, the RU 220 may perform channel estimation for uplink based on SRSs. The RU 220 may perform channel estimation for an uplink channel for each UE.

According to an embodiment, the RU 220 may generate SRS channel information based on a result of the channel estimation. The SRS channel information may include one or more parameters obtained through the result of the channel estimation of the RU 220. For example, the SRS channel information may be generated UE-specifically. The channel information may include a channel information value of an in-phase sample and a channel information value of a quadrature sample. The SRS channel information may include a channel information I value and a channel information Q value per unit resource (e.g., SRS symbol, PRB). In addition, for example, the SRS channel information may include a time offset value. The time offset is related to uplink synchronization and may be measured based on the SRS. In addition, for example, the SRS channel information may include an index indicating channel quality. The channel quality may be measured based on the SRS. In addition, for example, the SRS channel information may include a parameter for indicating a range of PRBs in which channel information is reported. Channel information for all PRBs may not be reported, but only for some PRBs among all PRBs.

According to an embodiment, all parameters of the SRS channel information may be included in section information in the C-plane message. According to another embodiment, at least a portion of the parameters may be included in section information in the C-plane message, and another portion may be included in section extension information in the C-plane message. In addition, according to an additional embodiment, a portion of the parameters may be fixed values and may be omitted from the C-plane message.

In operation 725, the RU 220 may transmit SRS channel information to the DU 210. The result of the channel estimation of the RU 220 may be used in a network entity supporting an upper layer. For example, the channel estimation result may be used for scheduling or radio resource management for terminals served by the RU 220. Therefore, the RU 220 may transmit channel information estimated from the SRS to the DU 210 for each slot. The RU 220 may store SRS channel information generated in operation 723 in channel memory of the RU 220. Therefore, when reporting the SRS channel information, the RU 220 may extract the SRS channel information stored in the channel memory and transmit the extracted SRS channel information to the RU 220.

The RU 220 may transmit the SRS channel information to the DU 210 after channel estimation is completed. A time interval may be present between receiving SRS configuration information from the RU 220 and transmitting an SRS report. After the RU 220 performs the channel estimation in operation 723, a time interval for preparing the SRS report may be required. Considering the capacity of a fronthaul interface between the DU 210 and the RU 220 and the calculation burden of the RU 220, the report of the SRS channel information of the RU 220 may be performed in parallel. That is, each operation described in FIG. 7 is an example of implementation, and it is not necessarily interpreted that the operations of the DU 210 or the RU 220 illustrated in FIG. 7 must be performed serially in all embodiments. According to an embodiment, operation 721 and operation 723 may be performed in parallel or independently of operation 725.

Since the RU 220 performs SRS channel estimation, the RU 220 may not transmit a C-plane message of Section type '1' for transmitting the received SRSs to the DU 210. While the processing delay for the SRS channel estimation is reduced, the burden of the fronthaul interface between the DU 210 and the RU 220 may be reduced. In addition, since the RU 220 directly performs channel estimation and transmits a result of the channel estimation to the DU 210, instead of the DU 210 providing channel information to the RU 220, the burden on the fronthaul interface may also be reduced.

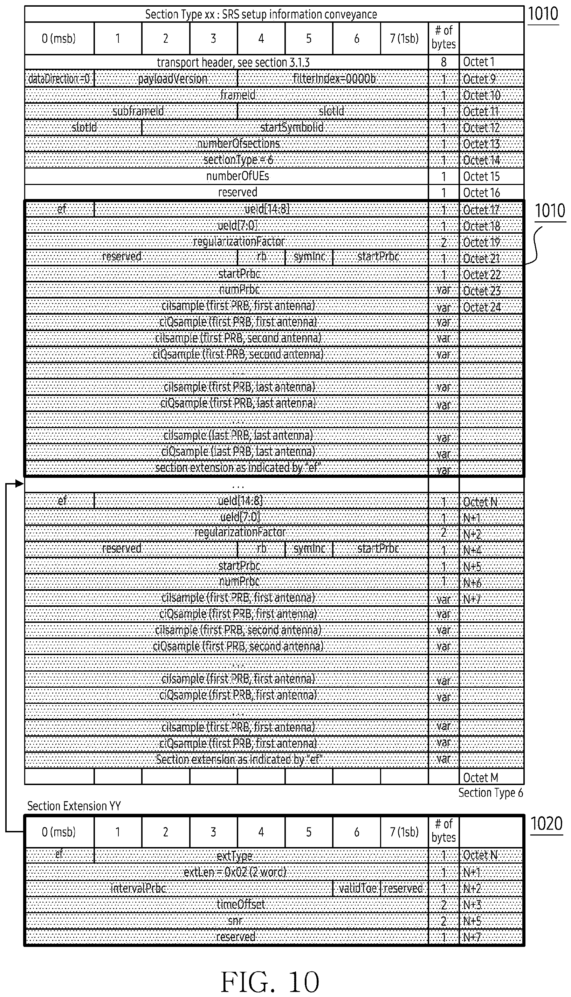

Although not illustrated in FIG. 7, a management-plane (M-plane) parameter between the DU 210 and the RU 220 may be defined. According to an embodiment, the M-plane parameter may include capability information indicating whether SRS channel estimation is possible in the RU 220. The RU 220 may transmit the M-plane message including the capability information to the DU 210. The DU 210 may identify that the SRS channel estimation is possible in the RU 220 through the capability information. In case that the SRS channel estimation is possible in the RU 220, the DU 210 may transmit a C-plane message newly defined in operation 721 to the RU 220. In case that the SRS channel estimation is possible in the RU 220, the DU 210 may receive a C-plane message newly defined in operation 723 from the RU 220. The M-plane parameter according to embodiments of the present disclosure will be described in detail with reference to FIG. 10.

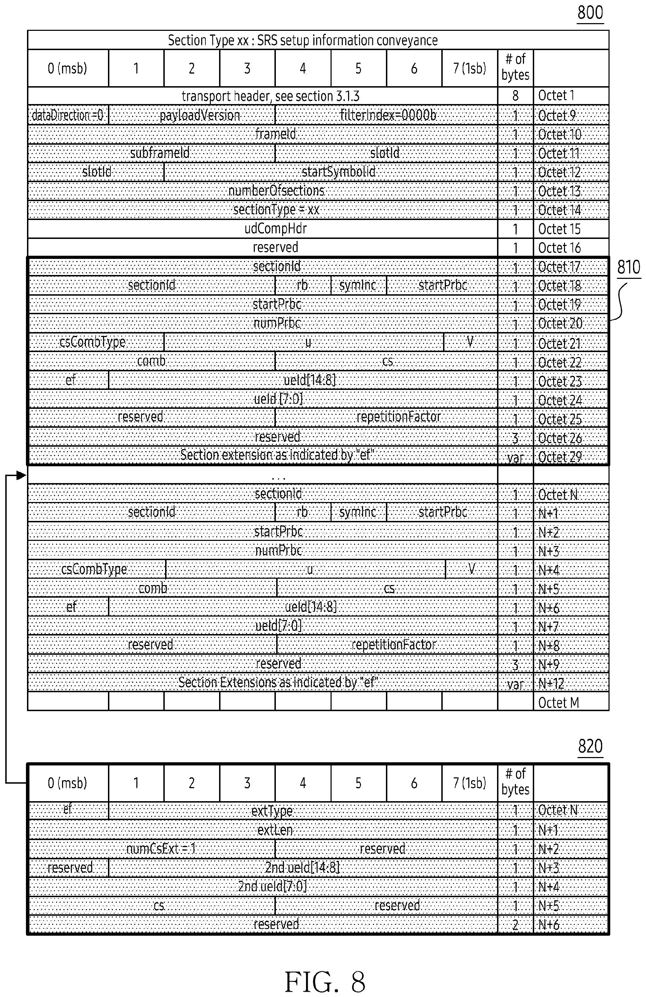

FIG. 8 illustrates an example of a control plane (C-plane) message including SRS configuration information according to an embodiment. In FIG. 8, an example of a C-plane message including SRS configuration information is described. The SRS configuration information may be used for SRS channel estimation. The DU 210 may transmit SRS configuration information for SRS channel estimation. According to an embodiment, a DU (e.g., the DU 210, the O-DU 251) may transmit a C-plane message for each of SRS symbols to an RU (e.g., the RU 220, the O-RU 253-1). The DU 210 may transmit SRS configuration information for each UE of all UEs related to the SRS symbol to the RU 220. FIG. 8 exemplifies a C-plane message including SRS configuration information of operation 721.

Referring to FIG. 8, a C-plane message 800 may include section information 810. According to an embodiment, for the C-plane message 800 including new section information 810, a new section type (e.g., section type 8, 9, 10, ..., and xx) may be defined. Before describing the section information 810, header information included in the C-plane message 800 is described.

The C-plane message 800 may include a transport header (e.g., eCPRI header or IEEE 1914.3) information. The transport header may include 'ecpriVersion', 'ecpriReserved', 'ecpriConcatenation', 'ecpriMessage', 'ecpriPayload', 'ecpriRtcid/ecpriPcid', and 'ecpriSeqid' as described above.

The C-plane message 800 may include common header information. The common header information may include 'dataDirection' indicating a data transmission direction of a base station (e.g. gNB), 'payloadVersion' indicating a valid payload protocol version of IEs in an application layer, and 'filterindex' indicating an index for a channel filter between IQ data and an air interface to be used in both DL and UL.

The common header information may include information for indicating a location of a time resource to which the C-plane message 800 may be applied. The location of the time resource may be represented by a frame, a subframe, a slot, or a symbol. The common header information may include 'frameId' indicating a frame number, 'subframeId' indicating a subframe number, 'slotId' indicating a slot number, and 'startSymbolId' indicating a symbol number. The frame is determined based on 256 modulo operation. The subframe has units of 1 ms included in a frame of 10 ms. The slot number is numbered in the subframe, and a maximum size may be 1, 2, 4, 8, or 16 according to the numerology.

The common header information may include 'numberOfsections' indicating the number of data sections included in the C-plane message 800. The common header information may include 'sectionType' determining a characteristic of the U-plane data. The common header information may include 'udCompHdr' indicating a compression method and a bit width in the uplink.

(1) Section Type

The C-plane message 800 may include section information 810. The section information 810 may be used to indicate a setting for SRS channel estimation of the RU 220. Hereinafter, in order to describe the SRS channel estimation of the RU 220, a term of SRS configuration is used, but other terms (e.g., SRS setup, SRS setting) having the same technical meaning may be used instead.

The section information 810 may include a 'sectionId', which means a section identifier. In case that coupling of C-Plane and U-Plane via 'sectionId' is used, 'sectionId' identifies an individual data section described by a data section description in the C-Plane message 800. The purpose of 'sectionId' is to map a U-Plane data section to a corresponding C-Plane message (and section type) 800 related to the data. The section information 810 may include 'rb' indicating whether every RB is used or every other RB is used, 'symInc' indicating a symbol number increment command, 'startPrbc' indicating a start PRB number of a data section description, 'numPrbc' indicating the number of consecutive PRBs per the data section description, and 'ef' indicating an extension flag.

The section information 810 according to the embodiments may include SRS sequence generation information and SRS resource information of each UE transmitting SRS in the SRS symbol. For example, in case that the number of UEs performing SRS transmission in the SRS symbol is plural, the C-plane message 800 may include SRS sequence generation information and SRS resource information of each of the plurality of UEs. In addition, for example, in case that one UE performs SRS transmission in the SRS symbol, the C-plane message 800 may include SRS sequence generation information and SRS resource information for the one UE. Herein, the section information 810 may include UE identification information of each UE. In the section information 810, SRS sequence generation information and SRS resource information for the corresponding UE may be identified based on UE identification information (or UE identifier) 'ueId'.

The section information 810 according to the embodiments may include parameters required for SRS channel estimation in the RU 220. For the SRS channel estimation, the RU 220 is required to know a generation method of SRS sequences transmitted by a terminal. The SRS sequence may be generated based on the following equation.

$$[\text{Equation 1}]$$

$$r^{(p_i)}(n, l') = r_{u,v}^{(\alpha_i, \delta)}(n)$$

$$0 \le n \le M_{\text{sc},b}^{\text{SRS}} - 1$$

$$l' \in \left\{0, 1, \dots, N_{\text{symb}}^{\text{SRS}} - 1\right\}$$

$$\delta = \log_2(K_{\text{TC}})$$

Herein, $M_{\text{sc},b}^{\text{SRS}}$ indicates the number of SRS subcarriers in a frequency domain, that is, a bandwidth. $N_{\text{symb}}^{\text{SRS}}$ indicates the number of SRS symbols. $\alpha_i$ indicates a cyclic shift. $p_i$ indicates an antenna port. $K_{\text{TC}}$ indicates a comb value. $u$ indicates a sequence group, and $v$ indicates a sequence number.

$$[\text{Equation 2}]$$

$$\alpha_i = 2\pi \frac{n_{\text{SRS}}^{\text{cs},i}}{n_{\text{SRS}}^{\text{cs.max}}}$$

$$n_{\text{SRS}}^{\text{cs},i} = \left(n_{\text{SRS}}^{\text{cs}} + \frac{n_{\text{SRS}}^{\text{cs.max}}(p_i - 1000)}{N_{\text{ap}}^{\text{SRS}}}\right) \bmod n_{\text{SRS}}^{\text{cs.max}}$$

$n_{\text{SRS}}^{\text{cs},i}$ indicates a cyclic shift value in 'transmissionComb' IE, which is an RRC parameter, and $n_{\text{SRS}}^{\text{cs,max}}$ indicates a maximum value of the cyclic shift. $N_{\text{ap}}^{\text{SRS}}$ indicates the number of antenna ports.

$$[\text{Equation 3}]$$

$$M_{\text{sc},b}^{\text{SRS}} = m_{\text{SRS},b} N_{\text{sc}}^{\text{RB}} / K_{\text{TC}}$$

$m_{\text{SRS},b}$ may be identified in a table specified by $C_{\text{SRS}}$ and $B_{\text{SRS}}$, which are RRC parameters. $N_{\text{sc}}^{\text{RB}}$ indicates the number (e.g. 12) of subcarriers per RB. $N_{\text{symb}}^{\text{SRS}}$ indicates the number of SRS symbols.

According to an embodiment, the section information 810 may include comb type information 'csCombType'. The comb type information may indicate a comb value. For example, the comb value may correspond to a value indicated by the transmission comb IE in SRS-Config, which is an RRC parameter of 3GPP. The comb value may be 2, 4, or 8. As an example, the comb type information may indicate a comb value and a cyclic shift value as shown in the table below.

[Table 1]

| csCombType | Remarks |
|---|---|
| 00b | comb value : 2, the number of CS (maximum value) : 8 |
| 01b | comb value : 4, the number of CS (maximum value) : 12 |
| 10b | comb value : 8, the number of CS (maximum value) : 6 |
| 11b | reserved |

According to an embodiment, the section information 810 may include information 'u' on a sequence group number. Base sequences may be divided into groups. At this time, the sequence group number indicates a group number. Each group may include one base sequence (sequence number: 0) having a length of a first range (e.g.,

$$M_{ZC} = mN_{sc}^{RB}/2^\delta \ , \quad \frac{1}{2} \leq \frac{m}{2^\delta} \leq 5$$

) and two base sequences (sequence numbers: 0, 1) having a length of a second range (e.g., $M_{ZC} = mN_{sc}^{RB}/2^\delta \ , \quad 6 \leq \frac{m}{2^\delta}$ ). For example, the sequence group number may indicate $u$ of 3GPP. u may have an integer value greater than or equal to 0 but less than or equal to 29. As an example, the information on the sequence group number may be indicated by 5 bits.

According to an embodiment, the section information 810 may include information 'v' on a sequence number. The sequence number may mean a sequence number within a group. For example, a sequence number may indicate $v$ of 3GPP. v may be 0 or 1. As an example, the information on the sequence number may be indicated by 1 bit.

According to an embodiment, the section information 810 may include information 'comb' on a comb offset. The comb offset may be used to indicate a location of a frequency domain in RE mapping of SRS symbols. For example, the comb offset may be a value indicated by the transmission comb IE of 3GPP. The comb offset corresponds to an integer value in a range of 0 or more and less than 'comb value'. As an example, information on a sequence number may be indicated by 3 bits. As another example, the information on a sequence number may be indicated by 4 bits.

According to an embodiment, the section information 810 may include cyclic shift information 'cs'. The cyclic shift information indicates a cyclic shift value for the UE. In the SRS sequence generation, the cyclic shift value may provide phase rotation to impart orthogonality to a signal of the UE. For example, the cyclic shift value may be a value indicated by the transmission comb IE of 3GPP. The cyclic shift value has a different range depending on the comb value. In case that the comb value is 2, the cyclic shift value is an integer value greater than or equal to 0 and less than or equal to 7. In case that the comb value is 4, the cyclic shift value is an integer value greater than or equal to 0 and less than or equal to 11. In case that the comb value is 8, the cyclic shift value is an integer value greater than or equal to 0 and less than or equal to 5. As an example, the information on a sequence number may be indicated by 4 bits.

According to an embodiment, the section information 810 may include information 'repetitionFactor' on a repetition factor. In RE mapping of SRS symbols, the repetition factor may be used for counting the SRS symbols in a time domain. For example, the repetition factor may be a value indicated by the repetitionfactor IE of 3GPP. The repetition factor may be 1, 2, or 4. As an example, the information on the repetition factor may be indicated by 2 bits. As another example, the information on the repetition factor may be indicated by 4 bits.

According to an embodiment, the section information 810 may include UE identification information (or UE identifier) 'ueId'. The UE identification information indicates a label of the UE to which section contents are applied. As an example, the UE identification information may be indicated by 15 bits.

(2) Section Extension

The C-plane message 800 may additionally include section extension information 820. That is, the C-plane message 800 may additionally include section information 810 and section extension information 820. The section extension information 820 may include 'extType', which provides a new extension type (e.g., 0xpp). The section extension information may include 'ef', which indicates whether there is another extension present or whether a current extension field is a last extension. The section extension information may include 'extLen', which provides a length of section extension in units of 32-bit (or 4-byte) words.

For SRS configuration for a plurality of UEs rather than one UE, the section extension information 820 may be additionally included in the C-plane message 800. For example, two UEs may be multiplexed within the same sections (time-frequency resource range). In this case, multiplexing for the UEs may be implemented through different cyclic shift values. According to an embodiment, the section extension information 820 may include cyclic shift information 'cs' indicating a cyclic shift value for another UE other than a UE of the section information 810. Since the cyclic shift value for the other UE is applied to the other UE, the UE of the section information 810 and the other UE may be multiplexed. For the cyclic shift information for the other UE, the description of the cyclic shift information 'cs' of the section information 810 may be referred to. In addition, the section extension information 820 may include UE identification information (or UE identifier) '2nd ueId' for indicating the other UE.

According to an embodiment, the section extension information 820 may include extension number information for indicating the number of UEs being multiplexed. The extension number information may indicate the number of additional cyclic shift fields. As an example, in FIG. 8, since two UEs are multiplexed, the extension number information may indicate 1. Although not illustrated in FIG. 8, as another example, in case that the extension number information is 1, the extension number information may be omitted in the section extension information 820.

In FIG. 8, it is described that other information other than a cyclic shift field value and the extension number information of another UE (hereinafter, second UE) are included in the section information 810, but the embodiments of the present disclosure are not limited thereto. According to another embodiment, at least a portion of information of the section information 810 illustrated in FIG. 8 may be included in the section extension information 820. For example, a section extension for SRS channel estimation in the RU 220 may be added to a C-plane message of an existing section type.

In FIG. 8, parameters required for SRS channel estimation in the RU 220 are illustrated. However, the parameters illustrated in FIG. 8 are only examples, and embodiments of the present disclosure are not limited to being interpreted as necessarily including all parameters illustrated in FIG. 8. In some embodiments, at least a portion of the parameters illustrated in FIG. 8 may be omitted. In addition, in some embodiments, at least a portion of the parameters illustrated in FIG. 8 may indicate a corresponding value in a manner different from those described above. In addition, FIG. 8 describes a C-plane message according to a new section type (or a new section type and a new section extension type), the above description does not exclude providing the parameters to the RU 220 through other methods. According to an embodiment, at least a portion of the above-described fields may be provided through a reserved field of the existing C-plane message.

In FIG. 8, the section information 810 and the section extension information 820 of the C-plane message 800 are illustrated together, but other embodiments of the present disclosure may not be limited thereto. According to an embodiment, the C-plane message 800 may include only the section information 810 without the section extension information 820. In addition, a C-plane message in which the section extension information 820 is added to other section information different from the section information 810 of the C-plane message 800 may also be understood as an embodiment of the present disclosure.

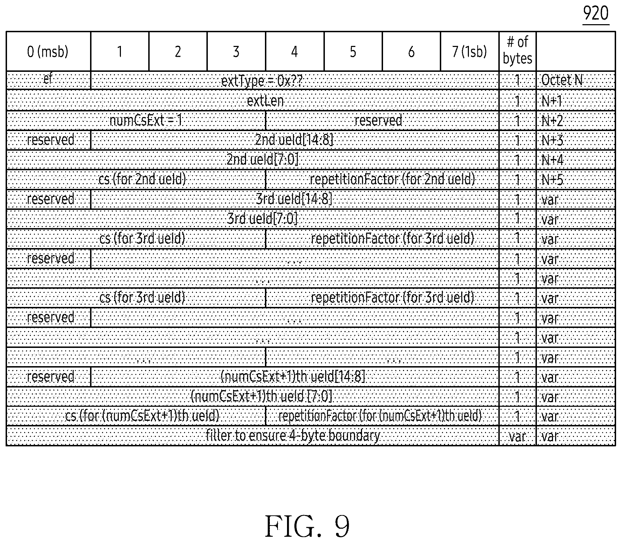

In FIG. 8, the section extension information 820 for multiplexing of two UEs is described. However, the two UEs are only an embodiment, and other embodiments of the present disclosure are not limited thereto. Hereinafter, in FIG. 9, an example of section extension information in case that not only two UEs but also three or more UEs are multiplexed will be described.

In FIG. 8, a C-plane message for an individual SRS symbol is described. According to an embodiment, in case that SRS transmission is performed across a plurality of SRS symbols, the DU 210 may transmit a C-plane message for each SRS symbol among the plurality of SRS symbols to the RU 220. Meanwhile, unlike FIG. 8, according to an embodiment, the DU 210 may transmit a C-plane message for the plurality of SRS symbols to the RU 220. At this time, information (e.g., numSymbol IE) (not illustrated) indicating the number of symbols may be included in the C-plane message.

FIG. 9 illustrates an example of SRS multiplexing information for each UE, according to an embodiment. The same frequency resource may be allocated to a plurality of UEs through a cyclic shift. For multiplexing through a cyclic shift, SRS multiplexing information may be added to a C-plane message (e.g., a C-plane message 920) through section extension.

Referring to FIG. 9, section extension information 920 may be added to a C-plane message (e.g., C-plane message 920). The section extension information 920 may include 'extType', which provides a new extension type (e.g., 0xpp). The section extension information may include 'ef', which indicates whether there is another extension present or whether a current extension field is a last extension. The section extension information may include 'extLen', which provides a length of section extension in units of 32-bit (or 4-byte) words.

According to an embodiment, the section extension information 920 may include extension number information for indicating the number of multiplexed UEs. The extension number information may indicate the number of additional cyclic shift fields. As an example, M UEs may be multiplexed. The extension number information may indicate M-1. The UEs may transmit orthogonal SRSs on the same frequency resource through different cyclic shift values. A range of the cyclic shift value may be determined according to a comb type. For example, in case that the comb value is 2, the cyclic shift value is an integer value greater than or equal to 0 and less than or equal to 7. The maximum number of multiplexable UEs may be determined as 8. In case that the comb value is 4, the cyclic shift value is an integer value greater than or equal to 0 and less than or equal to 11. The maximum number of multiplexable UEs may be determined as 12. In case that the comb value is 8, the cyclic shift value is an integer value greater than or equal to 0 and less than or equal to 5. The maximum number of multiplexable UEs may be determined as 6.

According to an embodiment, the section extension information 920 may include SRS multiplexing information for each UE. For example, M UEs may be multiplexed. The section extension information 920 may include M-1 pieces of multiplexing information. The i-th (i is an integer greater than or equal to 1 and less than or equal to M-1) SRS multiplexing information may include UE identification information ('2nd ueId', '3rd ueId', or '(numCsExt+1)th ueId') for indicating the i+1th UE and cyclic shift information ('cs (for 2nd ueId)', 'cs (for 3rd ueId)', or 'cs (for (numCsExt+1)th ueId)') for the i+1th UE. In addition, the i-th multiplexing information may include information on a repetition factor for the i+1th UE 'repetitionFactor (for 2nd ueId)', 'repetitionFactor (for 3rd ueId)', or 'repetitionFactor (for (numCsExt+1)th ueId'. For the UE identification information, the cyclic shift information, and the information on the repetition factor, the descriptions on the UE identification information, the cyclic shift information, and the information on the repetition factor in FIG. 8 may be referred to.

As an example, the UE identification information may be indicated by 2 bytes. The cyclic shift information may be indicated by 4 bits. The information on repetition factor may be indicated by 4 bits. In this case, for each UE added for multiplexing, 3 bytes of SRS multiplexing information may be required. Accordingly, a length (e.g., extLen field value) of the section extension information 920 may be determined as a value corresponding to $\lceil (numCsExt * 3 + 3)/4 \rceil$. Herein, numCsExt may indicate the number of SRS multiplexing information indicated by the extension number information.

In some embodiments, the section extension information 920 may further include filler information 'filler to ensure 4-byte boundary'. The filler information may include designated information (e.g., dummy bits) so that the section extension information 920 is generated in 4-byte units. For example, in case that (numCsExt*3 + 3)/4 is not a multiple of 4, the section extension information 920 may further include filler information. Meanwhile, according to another embodiment, the section extension information 920 may not include the filler information. For example, in case that (numCsExt*3 + 3)/4 is a multiple of 4, the section extension information 920 may not include the filler information.

FIG. 10 illustrates an example of SRS channel information according to an embodiment. FIG. 10 illustrates an example of a C-plane message including SRS channel information. RU may provide a result of the SRS channel estimation to an upper layer through the SRS channel information. According to an embodiment, DU (e.g., the DU 210, the O-DU 251) may transmit a C-plane message including the SRS channel information to RU (e.g., the RU 220, the O-RU 253-1). FIG. 10 illustrates a C-plane message including the SRS configuration information of operation 725.

Referring to FIG. 10, the C-plane message 1000 may include section information 1010. According to an embodiment, for the C-plane message 1000 including the section information 1010, a section type (e.g., Section type 6) for carrying channel information may be used. However, the C-plane message 100 may be transmitted from the RU 220 to the DU 210. The RU 220 may transmit channel information stored in channel memory of the RU 220 to the DU 210. Hereinafter, header information included in the C-plane message 1000 is described before describing the section information 1010.

The C-plane message 1000 may include a transport header (e.g., eCPRI header or IEEE 1914.3) information. The transport header may include 'ecpriVersion', 'ecpriReserved, 'ecpriConcatenation', 'ecpriMessage', 'ecpriPayload', 'ecpriRtcid/ecpriPcid', and 'ecpriSeqid', as described above.

The C-plane message 1000 may include common header information. The common header information may include 'dataDirection' indicating a data transmission direction of a base station (e.g. gNB), 'payloadVersion' indicating a valid payload protocol version of IEs in an application layer, and 'filterindex' indicating an index for a channel filter between IQ data and an air interface to be used in both DL and UL.

The common header information may include information indicating a location of a time resource to which the C-plane message 1000 may be applied. The location of the time resource may be indicated by a frame, a subframe, a slot, or a symbol. The common header information may include 'frameId' indicating a frame number, 'subframeId' indicating a subframe number, 'slotId' indicating a slot number, and 'startSymbolId' indicating a symbol number. The frame is determined based on 256 modulo operation. The subframe has units of 1 ms included in a frame of 10 ms. The slot number is numbered in the subframe, and a maximum size may be 1, 2, 4, 8, or 16 according to the numerology.

The common header information may include 'numberOfsections' indicating the number of data sections included in the C-plane message 1000. The common header information may include 'sectionType' determining a characteristic of U-plane data. The common header information may include 'udCompHdr' indicating a compression method and a bit width in the uplink.

According to embodiments, the C-plane message 1000 transmitted from the RU 220 to the DU 210 may include section information 1010. The section information 1010 may indicate a channel IQ value per UE.

According to an embodiment, the section information 1010 may include UE identification information (or UE identifier) 'ueId'. The UE identification information indicates a UE related to the section information 1010. As an example, the UE identification information may be indicated by 15 bits. In addition, according to an embodiment, the section information 1010 may include regularization information 'regularizationFactor'. The regularization information may indicate a regularization factor for beamforming. For example, the regularization factor may be used to calculate a beamforming weight using MMSE of the RU 220. As an example, the regularization information may be indicated by 2 bytes (i.e., 16 bits). Additionally, according to an embodiment, the section information 1010 may include 'rb' indicating whether every RB is used or every other RB is used, 'symInc' indicating a symbol number increment command, 'startPrbc' indicating a start PRB number of a data section description, 'numPrbc' indicating the number of PRBs per data section description, and 'ef' indicating an extension flag.

According to an embodiment, the section information 1010 may include channel information. The channel information may indicate channel coefficients calculated by SRSs. The channel information may include channel IQ values for a UE (e.g., ueId) of a corresponding section. The channel IQ values may include a channel information value of an in-phase sample (hereinafter, channel information I value) 'ciIsample' and a channel information value of a quadrature sample (hereinafter, channel information Q value) 'ciQsample'. For example, channel information may include a channel information I value and a channel information Q value, per unit resource (e.g., SRS symbol, PRB).

According to an embodiment, one C-plane message may be generated for a plurality of UEs to which the same SRS symbol is allocated. The one C-plane message may include a plurality of section information. The UE of each section may be one of the plurality of UEs to which the same SRS symbol is allocated. The channel information of each section may include a channel IQ value of a corresponding UE.

The RU 220 according to the embodiments may utilize a new type of section extension information 1020, for additional channel information in addition to the channel IQ value. The section extension information 1020 may be added to the section information. The C-plane message 1000 may additionally include the section extension information 1020. That is, the C-plane message 1000 may additionally include the section information 1010 and the section extension information 1020. The section extension information 1020 may include 'extType', which provides a new extension type (e.g., 0xYY). The section extension information may include 'ef', which indicates whether there is another extension present or whether a current extension field is a last extension. The section extension information may include 'extLen', which provides a length of section extension in units of 32-bit (or 4-byte) words.

According to an embodiment, the section extension information 1020 may include PRB interval information 'intervalPrbc'. The PRB interval information means an interval between PRBs for which channel information is reported. For example, the PRB interval information may be 1. Channel information for each of the PRBs may be reported. However, if channel information for all PRBs is reported, a fronthaul bandwidth between the DU 210 and the RU 220, which is proportional to the total number of PRBs may be used. In order to reduce the fronthaul bandwidth within a limited capacity, reporting for some PRBs may be performed at equal intervals rather than consecutive PRBs. For example, the PRB interval information may be greater than 1 (i.e., intervalPrbc>1). The reported PRBs may not be consecutive. The fronthaul bandwidth may be reduced. For example, the PRB interval information may be indicated by 6 bits.

A range of PRBs reported by the section extension information 1020 may be determined based on 'startPrbc' and 'numPrbc' indicated in the section information 1010. 'startPrbc' may indicate a number of a start PRB of the range of the PRBs being reported. 'numPrbc' indicates the number of the PRBs being reported. For example, the range of the PRBs being reported may be represented as the following equation.

[Equation 4]

$$\text{PRB range} = [\text{startPrbc}, \text{startPrbc} + \text{intervalPrbc}, \cdots, \text{startPrbc} + (\text{numPrbc}-1) * \text{intervalPrbc}]$$

Herein, PRB range represents a range of the PRBs being reported. For example, if 'startPrbc' is 6, 'numPrbc' is 4, and 'intervalPrbc' is 3, the range of the PRBs being reported is [6,9,12,15].

According to an embodiment, the section extension information 1020 may include channel quality information 'snr'. The RU 220 may perform channel estimation based on received SRSs. The RU 220 may perform channel estimation for each UE. Through the channel estimation, the RU 220 may obtain channel quality of uplink channel. For example, uplink channel quality may be a signal to noise ratio (SNR) value for the received SRS. The RU 220 may obtain SNR value for each UE. For example, the SNR value may be indicated by unsigned 16 bits. Meanwhile, in FIG. 10, SNR is exemplified as channel quality, but the embodiments of the present disclosure are not limited thereto. For channel quality, an indicator other than SNR may be used. The channel quality may be, for example, at least one of reference signal received power (RSRP) (i.e., SRS-RSRP), reference signal received quality (RSRQ), received signal strength indicator (RSSI), signal to interference and noise ratio (SINR), carrier to interference and noise ratio (CINR), error vector magnitude (EVM), bit error rate (BER), or block error rate (BLER). In addition to the examples described above, other terms having equivalent technical meanings or other indicators indicating channel quality may be used.

According to an embodiment, the section extension information 1020 may include time offset information 'timeOffset'. The RU 220 may perform obtaining of uplink synchronization based on the received SRSs. The RU 220 may obtain uplink synchronization for each UE through channel estimation. The RU 220 may obtain a time offset calculated according to the channel estimation. The time offset may indicate a difference between a transmission start timing of the SRS and a reception timing of a base station (e.g., the RU 220). The time offset may be used to control a timing advance (TA) of a corresponding UE. As an example, a value of the time offset may be indicated by signed 16 bits.

According to an embodiment, the section extension information 1020 may include validity information 'validToe'. The validity information indicates validity of time offset estimation. For example, a value '0' of the validity information may indicate invalid. A value '1' of the validity information may indicate valid. For example, the validity information may be indicated by 1 bit.

In FIG. 10, the section information 1010 and the section extension information 1020 of the C-plane message 1000 are illustrated together, but other embodiments of the present disclosure may not be limited thereto. According to an embodiment, the C-plane message 1000 may include only the section information 1010 without the section extension information 1020. In addition, a C-plane message in which the section extension information 1020 is added to other section information different from the section information 1010 of the C-plane message 1000 may also be understood as an embodiment of the present disclosure.

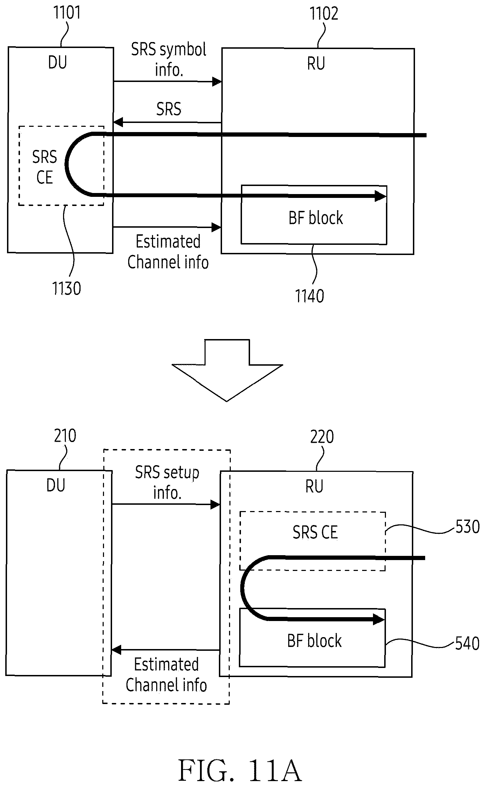

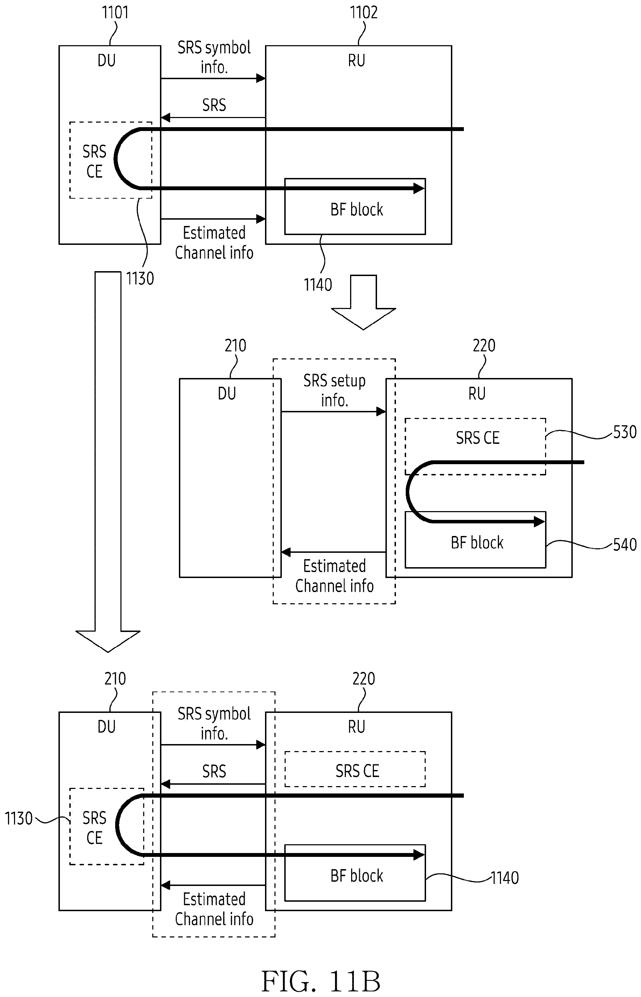

FIGS. 11A and 11B illustrate examples of SRS channel estimation according to a management plane (M-plane) message according to an embodiment. Hereinafter, in order to describe SRS channel estimation of the RU 220, a term of SRS configuration is used, but other terms having the same technical meaning (e.g., SRS setup, SRS setting) may be used instead.

Referring to FIG. 11A, DU 1101 and RU 1102 respectively indicate conventional DU and RU, which do not support the SRS channel estimation scheme in the RU of the present disclosure. The DU 1101 may transmit a C-plane message (e.g., a C-plane message of Section type 1) including information (e.g., SRS symbol info.) on SRS symbols to the RU 1102. The RU 1102 may receive SRSs from a terminal. The DU 1101 may perform SRS channel estimation 1130 based on the SRSs. The DU 1101 may transmit channel information generated based on a result of the SRS channel estimation 1130 to the RU 1102. The RU 1102 may perform beamforming 1140 based on the received channel information.

The DU 210 and the RU 220 respectively indicate a DU and an RU supporting the SRS channel estimation scheme in the RU of the present disclosure. The RU 220 may receive SRSs from a terminal. The RU 220 may not transmit a message including the received SRSs to the DU 210. The RU 220 may receive a C-plane message including configuration information for SRS channel estimation, that is, SRS configuration information (e.g., SRS setup info.) from the DU 210. The RU 220 may perform SRS channel estimation 530 based on the C-plane message and SRSs. The RU 220 may generate channel information based on the SRS channel estimation 530. For example, the channel information may be stored in channel memory. The RU 220 may perform beamforming 540 based on the channel information. Unlike the RU 1102, the RU 220 may obtain a beamforming weight reflected closer to an actual channel characteristic, by performing the beamforming 540 based on the channel information stored in the channel memory without waiting for reception of separate channel information. Independently of the beamforming 540, the RU 220 may transmit the generated channel information to the RU 1102.

<M-plane>

Comparing the DU 210 and the RU 220 to the DU 1101 and the RU 1102, messages transmitted on a fronthaul interface are different according to which entity supports SRS channel estimation. Accordingly, the DU 210 and the RU 220 according to embodiments may perform a negotiation procedure for indicating whether the RU 220 supports the SRS channel estimation function. The negotiation procedure may be performed on a management plane (M-plane).

According to an embodiment, the RU 220 may transmit an M-plane message including capability information of the RU 220 to the DU 210. For example, the capability information of the M-plane message may include a parameter (e.g., 'srs-ce-supported') indicating that the RU 220 supports the SRS channel estimation function. For example, according to yang.Module of the M-plane, 'o-ran-module-cap > module-capability > ru-capabilities > "srs-ce-supported"' may be set. A value of 'srs-ce-supported' of the RU 220 supporting the SRS channel estimation function may be set to 'true'. The DU 210 may check 'srs-ce-supported' of the RU 220 connected to the DU 210. The DU 210 may identify whether the RU 220 connected to the DU 210 supports the SRS channel estimation function.

According to an embodiment, the DU 210 may transmit, to the RU 220, an M-plane message including a parameter (e.g., srs-ce-activation) indicating that the SRS channel estimation function is performed in the RU 220. After checking the capability of the RU 220, the DU 210 may inform the RU 220 whether to provide the SRS channel estimation function of the RU 220. The RU 220 may identify that the SRS channel estimation function is activated in the RU 220, through the parameter. Meanwhile, a parameter indicating that the SRS channel estimation function is performed in the RU 220 may be transmitted through a field of the C-plane message, unlike the M-plane message. For example, as SRS configuration information (e.g., SRS configuration information of operation 721 of FIG. 7), section information (e.g., section information 810), or section extension information (e.g., section extension information 820, section extension information 920) described through FIGS. 7 to 9, the RU 220 may identify that the SRS channel estimation function is performed in the RU 220. For another example, a separate field indicating that the SRS channel estimation function is performed in the RU 220 may be defined. The RU 220 may identify, from the field, that the SRS channel estimation function is performed in the RU 220.

Referring to FIG. 11B, the RU 220 may support an SRS channel estimation function. The DU 210 may determine whether to provide the SRS channel estimation function to the RU 220. According to an embodiment, the DU 210 may transmit, to the RU 220, an M-plane message including a parameter indicating that the SRS channel estimation function is performed in the RU 220. As shown in FIG. 11A, the RU 220 may perform SRS channel estimation 530 and perform beamforming 540. In addition, the RU 220 may report the estimated channel information to the DU 210.

In contrast, the DU 210 may transmit, to the RU 220, an M-plane message including a parameter indicating that the SRS channel estimation function is not performed in the RU 220. That is, the SRS channel estimation function may be deactivated in the RU 220. Even when supporting the SRS channel estimation function, the RU 220 may not perform the SRS channel estimation. Like the DU 1001, the DU 210 may transmit a C-plane message (e.g., a C-plane message of Section type 1) including information on an SRS symbol to the RU 220. Like the RU 1002, the RU 220 may transmit a U-plane message including the received SRSs to the DU 210. The DU 210 may transmit a C-plane message (e.g., a C-plane message of section type 6) including channel information to the RU 220. The RU 220 may perform beamforming 1140 based on the channel information.

FIGS. 11A and 11B describe M-plane parameters for whether to support the SRS channel estimation function and whether to provide the SRS channel estimation function, but embodiments of the present disclosure are not limited thereto. Among the parameters described in FIGS. 7 to 10, a value for recommendation may be transmitted through an M-plane message.

According to an embodiment, the DU 210 may transmit an M-plane message including reporting interval information (e.g., srs-ce-report-prb-interval) to the RU 220. The DU 210 may transmit the reporting interval information to the RU 220, in order to adjust the amount of channel information required in an L2 layer. The report interval information may correspond to PRB interval information 'intervalPrbc' included in the section extension information 1020 of FIG. 10. The report interval information may be a value recommended (or set) to the RU 220 by the DU 210. The RU 220 may determine an interval between reported PRBs, based on the report interval information.

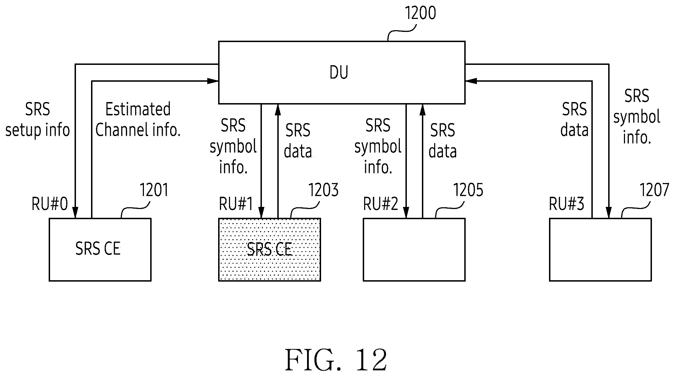

FIG. 12 illustrates examples of SRS channel estimation based on RU capability according to an embodiment. FIG. 12 exemplifies an RU that supports SRS channel estimation and performs the SRS channel estimation, an RU that supports SRS channel estimation but does not perform SRS channel estimation, and a situation in which an RU that does not support the SRS channel estimation function is connected to a DU.

Referring to FIG. 12, the DU 1200 may be connected to a plurality of RUs. For a DU 1200, the description of the DU 210 of FIG. 2A or the description of the O-DU 251 of FIG. 2B may be referred to. The plurality of RUs may include a first RU 1201, a second RU 1203, a third RU 1205, and a fourth RU 1207. For each RU, the description of the RU 220 of FIG. 2A or the description of the O-RU 253-1 of FIG. 2B may be referred to.

The first RU 1201 may support the SRS channel estimation function. For example, a value of 'srs-ce-supported', which is an M-plane parameter, may be set to 'true'. The first RU 1201 may perform the SRS channel function. The DU 1200 may inform the first RU 1201 to perform the SRS channel estimation in the first RU 1201. According to an embodiment, the DU 1200 may transmit, to the first RU 1201, an M-plane message including information indicating that the SRS channel estimation in the first RU 1201 is activated. According to embodiments of the present disclosure, the DU 1200 may transmit SRS configuration information (e.g., SRS configuration information of operation 721) to the first RU 1201. In addition, the first RU 1201 may transmit SRS channel information (e.g., SRS channel information of operation 725) to the DU 1200.

The second RU 1203 may support an SRS channel estimation function. For example, a value of 'srs-ce-supported', which is an M-plane parameter, may be set to 'true'. The second RU 1203 may not perform the SRS channel function. The DU 1200 may inform the second RU 1203 that the SRS channel estimation is not performed in the second RU 1203. According to an embodiment, the DU 1200 may transmit, to the second RU 1203, an M-plane message including information indicating that the SRS channel estimation in the second RU 1203 is not activated (or deactivated). The DU 1200 may transmit a C-plane message (e.g., a C-plane message of Section type 1) including SRS symbol information (e.g., SRS symbol info.) to the second RU 1203. The second RU 1203 may receive SRSs based on the C-plane message. The second RU 1203 may transmit a U-plane message including SRS data corresponding to the SRSs to the DU 1200. Although not illustrated in FIG. 12, the DU 1200 may generate channel information based on a result of SRS channel estimation performed by the DU 1200. The DU 1200 may transmit a C-plane message (e.g., a C-plane message of Section type 6) including the generated channel information to the second RU 1203.

The third RU 1205 may not support the SRS channel estimation function. The third RU 1205 cannot perform an SRS channel function. For example, a value of 'srs-ce-supported', which is an M-plane parameter, may be set to 'false', or the M-plane parameter may not be valid (i.e., non available (N/A)). The DU 1200 may transmit a C-plane message (e.g., a C-plane message of Section type 1) including SRS symbol information (e.g., SRS symbol info.) to the third RU 1205. The third RU 1205 may receive SRSs based on the C-plane message. The third RU 1205 may transmit a U-plane message including SRS data corresponding to the SRSs to the DU 1200. Although not illustrated in FIG. 12, the DU 1200 may generate channel information based on a result of SRS channel estimation performed by the DU 1200. The DU 1200 may transmit a C-plane message (e.g., a C-plane message of Section type 6) including the generated channel information to the third RU 1205.

The fourth RU 1207 may not support the SRS channel estimation function. The fourth RU 1207 cannot perform an SRS channel function. For example, a value of 'srs-ce-supported', which is an M-plane parameter, may be set to 'false', or the M-plane parameter may not be valid (i.e., N/A). The DU 1200 may transmit a C-plane message (e.g., a C-plane message of Section type 1) including SRS symbol information (e.g., SRS symbol info.) to the fourth RU 1207. The fourth RU 1207 may receive SRSs based on the C-plane message. The fourth RU 1207 may transmit a U-plane message including SRS data corresponding to the SRSs to the DU 1200. Although not illustrated in FIG. 12, the DU 1200 may generate channel information based on a result of SRS channel estimation performed by the DU 1200. The DU 1200 may transmit a C-plane message (e.g., a C-plane message of Section type 6) including the generated channel information to the fourth RU 1207.

According to embodiments, a method performed by a radio unit (RU) may comprise receiving sounding reference signals (SRSs). The method may comprise receiving, from a distributed unit (DU) via a fronthaul interface, a control plane (C-plane) message including SRS configuration information. The method may comprise performing channel estimation based on the SRSs and the SRS configuration information. The method may comprise performing beamforming based on the channel estimation.

According to an embodiment, the SRS configuration information may include one or more parameters for generating sequences of the SRSs. The one or more parameters may include at least one of a sequence group number for a base sequence, a sequence number for the base sequence, a transmission comb type, a comb offset, a cyclic shift, or a repetition factor.

According to an embodiment, the SRS configuration information may include user equipment (UE) identification information indicating a UE among one or more UEs performing SRS transmission within an SRS symbol. The SRS configuration information may include frequency resource information indicated in units of physical resource blocks (PRBs) within the SRS symbol. The SRS configuration information may include one or more parameters for generating SRS sequences of the UE. The one or more parameters may include at least one of a sequence group number for a base sequence, a sequence number for the base sequence, a transmission comb type, a comb offset, a cyclic shift, or a repetition factor.

According to an embodiment, section information of the C-plane message may include at least one of identification information of a first UE for multiplexing, a cyclic shift value for the first UE, or a repetition factor value for the first UE. Section extension information of the C-plane message may include at least one of identification information of a second UE for multiplexing, a cyclic shift value for the second UE, or a repetition factor value for the second UE.

According to an embodiment, the method may comprise generating channel information based on the channel estimation. The method may comprise transmitting, via the fronthaul interface to the DU, a C-plane message including the channel information. The channel information may include at least one of channel information values of in-phase samples and quadrature samples, information indicating a range of reported PRBs, information indicating a time offset, information indicating channel quality for the SRSs, or information indicating validity of the time offset.

According to an embodiment, the method may comprise transmitting, via the fronthaul interface to the DU, a management plane (M-plane) message including capability information indicating that a channel estimation function using the SRS is supported by the RU.

According to embodiments, a method performed by a distributed unit (DU may comprise generating SRS configuration information for channel estimation using a sounding reference signal (SRS) at a radio unit (RU). The method may comprise transmitting, via a fronthaul interface to the RU, a control plane (C-plane) message including the SRS configuration information. The channel estimation may be utilized for beamforming at the RU.

According to an embodiment, the SRS configuration information may include one or more parameters for generating sequences of the SRSs. The one or more parameters may include at least one of a sequence group number for a base sequence, a sequence number for the base sequence, a transmission comb type, a comb offset, a cyclic shift, or a repetition factor.

According to an embodiment, the SRS configuration information may include user equipment (UE) identification information indicating a UE among one or more UEs performing SRS transmission within an SRS symbol. The SRS configuration information may include frequency resource information indicated in units of physical resource blocks (PRBs) within the SRS symbol. The SRS configuration information may include one or more parameters for generating SRS sequences of the UE. The one or more parameters may include at least one of a sequence group number for a base sequence, a sequence number for the base sequence, a transmission comb type, a comb offset, a cyclic shift, or a repetition factor.

According to an embodiment, section information of the C-plane message may include at least one of identification information of a first UE for multiplexing, a cyclic shift value for the first UE, or a repetition factor value for the first UE. Section extension information of the C-plane message may include at least one of identification information of a second UE for multiplexing, a cyclic shift value for the second UE, or a repetition factor value for the second UE.

According to an embodiment, the method may comprise transmitting, via the fronthaul interface to the DU, a C-plane message including channel information calculated based on the channel estimation. The channel information may include at least one of channel information values of in-phase samples and quadrature samples, information indicating a range of reported PRBs, information indicating a time offset, information indicating channel quality for the SRSs, or information indicating validity of the time offset.

According to an embodiment, the method may comprise receiving, via the fronthaul interface from the RU, a management plane (M-plane) message including capability information indicating that a channel estimation function using the SRS is supported by the RU.

According to embodiments, an electronic device of a radio unit (RU) may comprise at least one fronthaul transceiver, at least one RF transceiver, and at least one processor coupled to the at least one fronthaul transceiver and the at least one RF transceiver. The at least one processor may be configured to receive sounding reference signals (SRSs). The at least one processor may be configured to receive, via a fronthaul interface from a distributed unit (DU), a control plane (C-plane) message including SRS configuration information. The at least one processor may be configured to perform channel estimation based on the SRSs and the SRS configuration information. The at least one processor may be configured to perform beamforming based on the channel estimation.

According to an embodiment, the SRS configuration information may include one or more parameters for generating sequences of the SRSs. The one or more parameters may include at least one of a sequence group number for a base sequence, a sequence number for the base sequence, a transmission comb type, a comb offset, a cyclic shift, or a repetition factor.

According to an embodiment, the SRS configuration information may include user equipment (UE) identification information indicating a UE among one or more UEs performing SRS transmission within an SRS symbol. The SRS configuration information may include frequency resource information indicated in units of physical resource blocks (PRBs) within the SRS symbol. The SRS configuration information may include one or more parameters for generating SRS sequences of the UE. The one or more parameters may include at least one of a sequence group number for a base sequence, a sequence number for the base sequence, a transmission comb type, a comb offset, a cyclic shift, or a repetition factor.

According to an embodiment, section information of the C-plane message may include at least one of identification information of a first UE for multiplexing, a cyclic shift value for the first UE, or a repetition factor value for the first UE. Section extension information of the C-plane message may include at least one of identification information of a second UE for multiplexing, a cyclic shift value for the second UE, or a repetition factor value for the second UE.

According to an embodiment, the at least one processor may be configured to generate channel information based on the channel estimation. The at least one processor may be configured to transmit, via the fronthaul interface to the DU, a C-plane message including the channel information. The channel information may include at least one of channel information values of in-phase samples and quadrature samples, information indicating a range of reported PRBs, information indicating a time offset, information indicating channel quality for the SRSs, or information indicating validity of the time offset.

According to an embodiment, the at least one processor may be configured to transmit, via the fronthaul interface to the DU, a management plane (M-plane) message including capability information indicating that a channel estimation function using the SRS is supported by the RU.

According to embodiments, an electronic device of a distributed unit (DU) may comprise at least one transceiver, and at least one processor coupled to the at least one transceiver. The at least one processor may be configured to generate SRS configuration information for channel estimation using a sounding reference signal (SRS) at a radio unit (RU). The at least one processor may be configured to transmit, via a fronthaul interface to the RU, a control plane (C-plane) message including the SRS configuration information. The channel estimation may be utilized for beamforming at the RU.

According to an embodiment, the SRS configuration information may include one or more parameters for generating sequences of the SRSs. The one or more parameters may include at least one of a sequence group number for a base sequence, a sequence number for the base sequence, a transmission comb type, a comb offset, a cyclic shift, or a repetition factor.

According to an embodiment, the SRS configuration information may include user equipment (UE) identification information indicating a UE among one or more UEs performing SRS transmission within an SRS symbol. The SRS configuration information may include frequency resource information indicated in units of physical resource blocks (PRBs) within the SRS symbol. The SRS configuration information may include one or more parameters for generating SRS sequences of the UE. The one or more parameters may include at least one of a sequence group number for a base sequence, a sequence number for the base sequence, a transmission comb type, a comb offset, a cyclic shift, or a repetition factor.

According to an embodiment, section information of the C-plane message may include at least one of identification information of a first UE for multiplexing, a cyclic shift value for the first UE, or a repetition factor value for the first UE. Section extension information of the C-plane message may include at least one of identification information of a second UE for multiplexing, a cyclic shift value for the second UE, or a repetition factor value for the second UE.

According to an embodiment, the at least one processor may be configured to transmit, via the fronthaul interface to the DU, a C-plane message including channel information calculated based on the channel estimation. The channel information may include at least one of channel information values of in-phase samples and quadrature samples, information indicating a range of reported PRBs, information indicating a time offset, information indicating channel quality for the SRSs, or information indicating validity of the time offset.

According to an embodiment, the at least one processor may be configured to receive, via the fronthaul interface from the RU, a management plane (M-plane) message including capability information indicating that a channel estimation function using the SRS is supported by the RU.

According to embodiments, a non-transitory computer-readable storage medium is provided. The non-transitory computer-readable storage medium may store one or more programs. The one or more programs may cause, when executed by a processor of a radio unit (RU), the RU to receive sounding reference signals (SRSs), receive, from a distributed unit (DU) via a fronthaul interface, a control plane (C-plane) message including SRS configuration information, perform channel estimation based on the SRSs and the SRS configuration information, and perform beamforming based on the channel estimation.

According to embodiments, a non-transitory computer-readable storage medium is provided. The non-transitory computer-readable storage medium may store one or more programs. The one or more programs may cause, when executed by a processor of a distributed unit (DU), the DU to generate SRS configuration information for channel estimation using a sounding reference signal (SRS) at a radio unit (RU), and transmit, via a fronthaul interface to the RU, a control plane (C-plane) message including the SRS configuration information. The channel estimation may be utilized for beamforming at the RU.

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, the program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A method performed by a radio unit (RU), the method comprising:

   receiving sounding reference signals (SRSs);
   receiving, from a distributed unit (DU) via a fronthaul interface, a control plane (C-plane) message including SRS configuration information;
   performing channel estimation based on the SRSs and the SRS configuration information; and
   performing beamforming based on the channel estimation.

2. The method of claim 1,

   wherein the SRS configuration information includes user equipment (UE) identification information indicating a UE among one or more UEs performing SRS transmission within an SRS symbol,
   wherein the SRS configuration information includes frequency resource information indicated in units of physical resource blocks (PRBs) within the SRS symbol,
   wherein the SRS configuration information includes one or more parameters for generating SRS sequences of the UE, and
   wherein the one or more parameters include at least one of a sequence group number for a base sequence, a sequence number for the base sequence, a transmission comb type, a comb offset, a cyclic shift, or a repetition factor.

3. The method of claims 1 to 2,

   wherein section information of the C-plane message includes at least one of identification information of a first UE for multiplexing, a cyclic shift value for the first UE, or a repetition factor value for the first UE, and
   wherein section extension information of the C-plane message includes at least one of identification information of a second UE for multiplexing, a cyclic shift value for the second UE, or a repetition factor value for the second UE.

4. The method of claims 1 to 3, further comprising:

   generating channel information based on the channel estimation; and
   transmitting, via the fronthaul interface to the DU, a C-plane message including the channel information,
   wherein the channel information includes at least one of channel information values of in-phase samples and quadrature samples, information indicating a range of reported PRBs, information indicating a time offset, information indicating channel quality for the SRSs, or information indicating validity of the time offset.

5. The method of claims 1 to 4, further comprising:
   transmitting, via the fronthaul interface to the DU, a management plane (M-plane) message including capability information indicating that a channel estimation function using the SRS is supported by the RU.

6. A method performed by a distributed unit (DU), the method comprising:

generating SRS configuration information for channel estimation using a sounding reference signal (SRS) at a radio unit (RU); and

transmitting, via a fronthaul interface to the RU, a control plane (C-plane) message including the SRS configuration information,

wherein the channel estimation is utilized for beamforming at the RU.

7. The method of claim 6,

wherein the SRS configuration information includes user equipment (UE) identification information indicating a UE among one or more UEs performing SRS transmission within an SRS symbol,

wherein the SRS configuration information includes frequency resource information indicated in units of physical resource blocks (PRBs) within the SRS symbol,

wherein the SRS configuration information includes one or more parameters for generating SRS sequences of the UE, and

wherein the one or more parameters include at least one of a sequence group number for a base sequence, a sequence number for the base sequence, a transmission comb type, a comb offset, a cyclic shift, or a repetition factor.

8. The method of claims 6 to 7,

wherein section information of the C-plane message includes at least one of identification information of a first UE for multiplexing, a cyclic shift value for the first UE, or a repetition factor value for the first UE, and

wherein section extension information of the C-plane message includes at least one of identification information of a second UE for multiplexing, a cyclic shift value for the second UE, or a repetition factor value for the second UE.

9. The method of claims 6 to 8, further comprising:

transmitting, via the fronthaul interface to the DU, a C-plane message including channel information calculated based on the channel estimation,

wherein the channel information includes at least one of channel information values of in-phase samples and quadrature samples, information indicating a range of reported PRBs, information indicating a time offset, information indicating channel quality for the SRSs, or information indicating validity of the time offset.

10. The method of claims 6 to 9, further comprising:
receiving, via the fronthaul interface from the RU, a management plane (M-plane) message including capability information indicating that a channel estimation function using the SRS is supported by the RU.

11. An electronic device of a radio unit (RU), comprising:

at least one fronthaul transceiver;
at least one RF transceiver; and
at least one processor coupled to the at least one fronthaul transceiver and the at least one RF transceiver,
wherein the at least one processor is configured to:

receive sounding reference signals (SRSs);
receive, via a fronthaul interface from a distributed unit (DU), a control plane (C-plane) message including SRS configuration information;
perform channel estimation based on the SRSs and the SRS configuration information; and
perform beamforming based on the channel estimation.

12. The electronic device of claim 11, wherein the at least one processor is configured to perform one of the methods of any one of claims 2 to 5.

13. An electronic device of a distributed unit (DU), comprising:

at least one transceiver; and
at least one processor coupled to the at least one transceiver,

wherein the at least one processor is configured to:

generate SRS configuration information for channel estimation using a sounding reference signal (SRS) at a radio unit (RU); and

transmit, via a fronthaul interface to the RU, a control plane (C-plane) message including the SRS configuration information,

wherein the channel estimation is utilized for beamforming at the RU.

14. The electronic device of claim 13, wherein the at least one processor is configured to perform one of the methods of any one of claims 7 to 10.

15. A non-transitory computer-readable storage medium, comprising:

a memory storing one or more programs,

wherein the one or more programs are configured to cause a radio unit (RU) to perform one of the methods of any one of claims 1 to 5, or to cause a distributed unit (DU) to perform one of the methods of any one of claims 6 to 10.

110

120

FIG. 1

FIG. 2A

110

251

eNB/gNB

O-DU

LLS-C    LLS-U

LLS-C    LLS-U

O-RU    ...    O-RU

253-1    253-n

FIG. 2B

210

DU

310

320

330

| TRANSCEIVER | MEMORY | PROCESSOR |

FIG. 3A

220

RU

360

RF
TRANSCEIVER

365

FRONTHAUL
TRANSCEIVER

370

MEMORY

380

PROCESSOR

FIG. 3B

FIG. 4

FIG. 5

FIG. 6

FIG. 7

800

| 0 (msb) | 1 | 2 | 3 | 4 | 5 | 6 | 7 (1sb) | # of bytes | |
|---------|---|---|---|---|---|---|---------|------------|---|
| Section Type xx : SRS setup information conveyance | | | | | | | | | |
| transport header, see section 3.1.3 | | | | | | | | 8 | Octet 1 |
| dataDirection =0 | payloadVersion | | | filterIndex=0000b | | | | 1 | Octet 9 |
| frameId | | | | | | | | 1 | Octet 10 |
| subframeId | | | | slotId | | | | 1 | Octet 11 |
| slotId | | startSymbolId | | | | | | 1 | Octet 12 |
| numberOfsections | | | | | | | | 1 | Octet 13 |
| sectionType = xx | | | | | | | | 1 | Octet 14 |
| udCompHdr | | | | | | | | 1 | Octet 15 |
| reserved | | | | | | | | 1 | Octet 16 |
| sectionId | | | | | | | | 1 | Octet 17 |
| sectionId | | | rb | symInc | startPrbc | | | 1 | Octet 18 |
| startPrbc | | | | | | | | 1 | Octet 19 |
| numPrbc | | | | | | | | 1 | Octet 20 |
| csCombType | | u | | | | | V | 1 | Octet 21 |
| comb | | | cs | | | | | 1 | Octet 22 |
| ef | | ueId[14:8] | | | | | | 1 | Octet 23 |
| ueId [7:0] | | | | | | | | 1 | Octet 24 |
| reserved | | | repetitionFactor | | | | | 1 | Octet 25 |
| reserved | | | | | | | | 3 | Octet 26 |
| Section extension as indicated by "ef" | | | | | | | | var | Octet 29 |
| . . . | | | | | | | | | |
| sectionId | | | | | | | | 1 | Octet N |
| sectionId | | | rb | symInc | startPrbc | | | 1 | N+1 |
| startPrbc | | | | | | | | 1 | N+2 |
| numPrbc | | | | | | | | 1 | N+3 |
| csCombType | | u | | | | | V | 1 | N+4 |
| comb | | | cs | | | | | 1 | N+5 |
| ef | | ueId[14:8] | | | | | | 1 | N+6 |
| ueId[7:0] | | | | | | | | 1 | N+7 |
| reserved | | | repetitionFactor | | | | | 1 | N+8 |
| reserved | | | | | | | | 3 | N+9 |
| Section Extensions as indicated by "ef" | | | | | | | | var | N+12 |
| | | | | | | | | | Octet M |

810

820

| 0 (msb) | 1 | 2 | 3 | 4 | 5 | 6 | 7 (1sb) | # of bytes | |
|---------|---|---|---|---|---|---|---------|------------|---|
| ef | | extType | | | | | | 1 | Octet N |
| extLen | | | | | | | | 1 | N+1 |
| numCsExt = 1 | | | reserved | | | | | 1 | N+2 |
| reserved | | 2nd ueId[14:8] | | | | | | 1 | N+3 |
| 2nd ueId[7:0] | | | | | | | | 1 | N+4 |
| cs | | | reserved | | | | | 1 | N+5 |
| reserved | | | | | | | | 2 | N+6 |

FIG. 8

920

| 0 (msb) | 1 | 2 | 3 | 4 | 5 | 6 | 7 (1sb) | # of bytes | |
|---|---|---|---|---|---|---|---|---|---|
| ef | extType = 0x?? | | | | | | | 1 | Octet N |
| extLen | | | | | | | | 1 | N+1 |
| numCsExt = 1 | | | | reserved | | | | 1 | N+2 |
| reserved | 2nd ueId[14:8] | | | | | | | 1 | N+3 |
| 2nd ueId[7:0] | | | | | | | | 1 | N+4 |
| cs (for 2nd ueId) | | | | repetitionFactor (for 2nd ueId) | | | | 1 | N+5 |
| reserved | 3rd ueId[14:8] | | | | | | | 1 | var |
| 3rd ueId[7:0] | | | | | | | | 1 | var |
| cs (for 3rd ueId) | | | | repetitionFactor (for 3rd ueId) | | | | 1 | var |
| reserved | ... | | | | | | | 1 | var |
| ... | | | | | | | | 1 | var |
| cs (for 3rd ueId) | | | | repetitionFactor (for 3rd ueId) | | | | 1 | var |
| reserved | ... | | | | | | | 1 | var |
| ... | | | | | | | | 1 | var |
| ... | | | | ... | | | | 1 | var |
| reserved | (numCsExt+1)th ueId[14:8] | | | | | | | 1 | var |
| (numCsExt+1)th ueId [7:0] | | | | | | | | 1 | var |
| cs (for (numCsExt+1)th ueId) | | | | repetitionFactor (for (numCsExt+1)th ueId) | | | | 1 | var |
| filler to ensure 4-byte boundary | | | | | | | | var | var |

FIG. 9

1010

| 0 (msb) | 1 | 2 | 3 | 4 | 5 | 6 | 7 (1sb) | # of bytes | |
|---|---|---|---|---|---|---|---|---|---|
| Section Type xx : SRS setup information conveyance | | | | | | | | | |
| transport header, see section 3.1.3 | | | | | | | | 8 | Octet 1 |
| dataDirection=0 | payloadVersion | | filterIndex=0000b | | | | | 1 | Octet 9 |
| frameId | | | | | | | | 1 | Octet 10 |
| subframeId | | | | slotId | | | | 1 | Octet 11 |
| slotId | | startSymbolId | | | | | | 1 | Octet 12 |
| numberOfsections | | | | | | | | 1 | Octet 13 |
| sectionType = 6 | | | | | | | | 1 | Octet 14 |
| numberOfUEs | | | | | | | | 1 | Octet 15 |
| reserved | | | | | | | | 1 | Octet 16 |

1010

| 0 (msb) | 1 | 2 | 3 | 4 | 5 | 6 | 7 (1sb) | # of bytes | |
|---|---|---|---|---|---|---|---|---|---|
| ef | ueId[14:8] | | | | | | | 1 | Octet 17 |
| ueId[7:0] | | | | | | | | 1 | Octet 18 |
| regularizationFactor | | | | | | | | 2 | Octet 19 |
| reserved | | | | rb | symInc | startPrbc | | 1 | Octet 21 |
| startPrbc | | | | | | | | 1 | Octet 22 |
| numPrbc | | | | | | | | var | Octet 23 |
| ciIsample (first PRB, first antenna) | | | | | | | | var | Octet 24 |
| ciQsample (first PRB, first antenna) | | | | | | | | var | |
| ciIsample (first PRB, second antenna) | | | | | | | | var | |
| ciQsample (first PRB, second antenna) | | | | | | | | var | |
| ... | | | | | | | | | |
| ciIsample (first PRB, last antenna) | | | | | | | | var | |
| ciQsample (first PRB, last antenna) | | | | | | | | var | |
| ... | | | | | | | | | |
| ciIsample (last PRB, last antenna) | | | | | | | | var | |
| ciQsample (last PRB, last antenna) | | | | | | | | var | |
| section extension as indicated by "ef" | | | | | | | | var | |
| . . . | | | | | | | | | |
| ef | ueId[14:8] | | | | | | | 1 | Octet N |
| ueId[7:0] | | | | | | | | 1 | N+1 |
| regularizationFactor | | | | | | | | 2 | N+2 |
| reserved | | | | rb | symInc | startPrbc | | 1 | N+4 |
| startPrbc | | | | | | | | 1 | N+5 |
| numPrbc | | | | | | | | 1 | N+6 |
| ciIsample (first PRB, first antenna) | | | | | | | | var | N+7 |
| ciQsample (first PRB, first antenna) | | | | | | | | var | |
| ciIsample (first PRB, second antenna) | | | | | | | | var | |
| ciQsample (first PRB, second antenna) | | | | | | | | var | |
| ... | | | | | | | | | |
| ciIsample (first PRB, first antenna) | | | | | | | | var | |
| ciQsample (first PRB, first antenna) | | | | | | | | var | |
| ... | | | | | | | | | |
| ciIsample (first PRB, first antenna) | | | | | | | | var | |
| ciQsample (first PRB, first antenna) | | | | | | | | var | |
| Section extension as indicated by "ef" | | | | | | | | var | |
| | | | | | | | | | Octet M |

Section Type 6

Section Extension YY

1020

| 0 (msb) | 1 | 2 | 3 | 4 | 5 | 6 | 7 (1sb) | # of bytes | |
|---|---|---|---|---|---|---|---|---|---|
| ef | extType | | | | | | | 1 | Octet N |
| extLen = 0x02 (2 word) | | | | | | | | 1 | N+1 |
| intervalPrbc | | | | | | validToe | reserved | 1 | N+2 |
| timeOffset | | | | | | | | 2 | N+3 |
| snr | | | | | | | | 2 | N+5 |
| reserved | | | | | | | | 1 | N+7 |

FIG. 10

40

FIG. 11A

FIG. 11B

1200

DU

SRS
setup info

Estimated
Channel info.

SRS
symbol
info.

SRS
data

SRS
symbol
info.

SRS
data

SRS
data

SRS
symbol
info.

RU#0

1201

SRS CE

RU#1

1203

SRS CE

RU#2

1205

RU#3

1207

FIG. 12

## INTERNATIONAL SEARCH REPORT

| International application No. |
|---|
| **PCT/KR2023/009047** |

| **A.** | **CLASSIFICATION OF SUBJECT MATTER** |
|---|---|
| | **H04L 5/00**(2006.01)i; **H04L 25/02**(2006.01)i; **H04B 7/06**(2006.01)i; **H04L 1/08**(2006.01)i |

According to International Patent Classification (IPC) or to both national classification and IPC

| **B.** | **FIELDS SEARCHED** |
|---|---|

Minimum documentation searched (classification system followed by classification symbols)

H04L 5/00(2006.01); H04B 7/0456(2017.01); H04B 7/06(2006.01); H04L 29/08(2006.01); H04L 29/10(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RU(radio unit), DU(distributed unit), SRS(sounding reference signal), 제어 평면 (control plane, C-plane), 프론트홀 인터페이스(fronthaul interface), 채널 추정(channel estimation), 빔포밍(beamform ing), 섹션 확장(section extension)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | SAMSUNG. Side control information to enable NR network controlled repeaters. R1-2203921, 3GPP TSG RAN WG1 #109-e, e-Meeting. 29 April 2022. <br> See sections 3, 3.1.1-3.1.2 and 3.4; and figures 1 and 5. | 1-15 |
| Y | KR 10-2022-0037305 A (SAMSUNG ELECTRONICS CO., LTD.) 24 March 2022 (2022-03-24) <br> See paragraphs [0007]-[0009], [0069]-[0091], [0104]-[0105] and [0188]-[0243]; and claim 6. | 1-15 |
| A | US 2022-0131580 A1 (WISIG NETWORKS PRIVATE LIMITED) 28 April 2022 (2022-04-28) <br> See claims 1-24. | 1-15 |
| A | WO 2019-135656 A1 (SAMSUNG ELECTRONICS CO., LTD.) 11 July 2019 (2019-07-11) <br> See paragraphs [0083]-[0094]; claims 1-4; and figure 5. | 1-15 |
| A | HUAWEI et al. Discussions on side control information to enable NR network-controlled repeaters. R1-2203133, 3GPP TSG-RAN WG1 Meeting #109-e, e-Meeting. 29 April 2022. <br> See sections 2 and 4. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 October 2023** | **06 October 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/009047**

| Patent document cited in search report | | | Publication date (day/month/year) | Patent family member(s) | | | Publication date (day/month/year) |
|---|---|---|---|---|---|---|---|
| KR | 10-2022-0037305 | A | 24 March 2022 | AU | 2023-343338 | A1 | 04 May 2023 |
| | | | | CN | 116158166 | A | 23 May 2023 |
| | | | | EP | 4203588 | A1 | 28 June 2023 |
| | | | | US | 2023-0224118 | A1 | 13 July 2023 |
| | | | | WO | 2022-060180 | A1 | 24 March 2022 |
| US | 2022-0131580 | A1 | 28 April 2022 | US | 11489568 | B2 | 01 November 2022 |
| | | | | US | 2022-0416859 | A1 | 29 December 2022 |
| WO | 2019-135656 | A1 | 11 July 2019 | CN | 111567018 | A | 21 August 2020 |
| | | | | EP | 3723348 | A1 | 14 October 2020 |
| | | | | EP | 3723348 | B1 | 28 December 2022 |
| | | | | EP | 4167538 | A1 | 19 April 2023 |
| | | | | KR | 10-2020-0098700 | A | 20 August 2020 |
| | | | | US | 11456833 | B2 | 27 September 2022 |
| | | | | US | 2020-0358575 | A1 | 12 November 2020 |
| | | | | US | 2022-0407593 | A1 | 22 December 2022 |

Form PCT/ISA/210 (patent family annex) (July 2022)